(19) Europäisches Patentamt
European Patent Office
Office européen des brevets

(11) **EP 4 234 965 A1**

(12) **EUROPEAN PATENT APPLICATION**

(43) Date of publication:
**30.08.2023 Bulletin 2023/35**

(21) Application number: **23175138.9**

(22) Date of filing: **30.12.2016**

(51) International Patent Classification (IPC):
*F16C 33/12* (2006.01)   *F16C 11/04* (2006.01)

(52) Cooperative Patent Classification (CPC):
**F16C 11/04; F16C 11/045; F16C 17/02;
F16C 33/10; F16C 33/121; F16C 33/128;
F16C 33/206;** F16C 33/203; F16C 33/208;
F16C 2202/10; F16C 2208/30; F16C 2223/32;
F16C 2240/60

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2015 US 201562273634 P**

(62) Document number(s) of the earlier application(s) in
accordance with Art. 76 EPC:
**20193697.8 / 3 779 219
16828754.8 / 3 397 871**

(71) Applicant: **Saint-Gobain Performance Plastics
Pampus GmbH
47877 Willich (DE)**

(72) Inventor: **HARTMANN, Juergen
88145 Hergatz (DE)**

(74) Representative: **Zimmermann & Partner
Patentanwälte mbB
Postfach 330 920
80069 München (DE)**

Remarks:
This application was filed on 24-05-2023 as a
divisional application to the application mentioned
under INID code 62.

(54) **CORROSION RESISTANT BUSHING**

(57)    A bushing comprises a porous metallic layer,
the porous metallic layer formed by a first composition
and a second composition. The first composition can include iron. The second composition can include a metal
having an electronegativity less than iron. The bushing
can further include a sliding layer overlying the porous
metallic layer.

FIG. 2A

**(Cont. next page)**

FIG. 2B

**Description**

TECHNICAL FIELD

This disclosure, in general, relates corrosion resistant bushings with a high load capability.

Sliding bearing composite materials consisting of a load bearing substrate and a sliding layer overlay are generally known. The load bearing substrate and the sliding layer are usually connected by laminating using a suitable adhesive. The sliding bearing composite materials can be used to form maintenance free bushing used, for example, by the automotive industry. These maintenance free bushings can be used for door, hood, and engine compartment hinges, seats, steering columns, flywheels, balancer shaft bearings, etc. Additionally, maintenance free bushings formed from the sliding bearing composite materials can also be used in non-automotive applications. In some applications, the sliding bearings are exposed to environmental conditions that lead to corrosion, especially when the load bearing substrate is made of iron alloys, such as steel. There is an ongoing need for improved maintenance free bushings that have a longer maintenance free lifetime and improved delamination resistance or corrosion resistance a high load capability.

SUMMARY

In a first aspect, a sliding article comprises a load bearing substrate, a metal containing layer, and a sliding layer. The loadbearing substrate has a first major surface, a second major surface, and an edge. The load bearing substrate further comprises a thickness $t_1$. The metal containing layer can overlie and can be in direct contact with the first major surface. The metal containing layer has a thickness $t_2$. In at least one embodiment, $t_2$ is at least 10 $\mu$m. The sliding layer can overlie the first major surface or the second major surface. In at least one embodiment the ratio of $t_2/t_1$ is at least 1/10, or $t_1 \leq 10\ t_2$.

In a second aspect, a hinge assembly can include a first hinge portion and a second hinge portion, a pin joining the first hinge portion with the second hinge portion, and a bushing. The bushing can include a loadbearing substrate, a metal containing layer, and a sliding layer. The loadbearing substrate can have a first major surface, a second major surface opposite the first major surface, and an edge. The loadbearing substrate includes a thickness $t_1$. The metal containing layer overlies and can be in direct contact with the first major surface. The metal containing layer can have a thickness $t_2$. In one embodiment, $t_2$ is at least 10 $\mu$m. The sliding layer can overlie the first major surface or the second major surface. A ratio of $t_2/t_1$ can be at least 1/10.

In a third aspect, a method of preparing a bushing can include providing a load bearing substrate and a metal containing layer. The load bearing substrate has a first major surface and a second major surface. The metal containing can be cladded onto the first major surface. In another embodiment, an metal containing coating provided by e. g. spray coating, metal spraying, mechanical coating, galvanic, hot-dipping, or any combination thereof. The method can further include applying a sliding layer over first major surface or over the second major surface to form a laminate. The method can further include cutting a blank from the laminate. The method can further include forming a bushing from the blank.

In a fourth aspect, a method of preparing a corrosion resistant iron-containing article can include providing a substrate. The substrate includes a first major surface and a second major surface. The substrate includes an iron containing layer. The iron containing layer can form the first major surface. The substrate can further include a metal containing layer, the metal containing layer overlying the first major surface. The method can further include cutting the substrate from the metal containing layer across the first major surface to the second major surface to form a cross-section. The method can further include forming an aluminous layer over the cross-section.

In a fifth aspect, a bushing includes a multilayered metallic substrate. The multi-layered substrate includes a steel layer. The steel layer has a first major surface and a second major surface. The bushing can further include a first metal containing layer adjacent to and in direct contact with the first major surface. The bushing can further include a second metal containing layer adjacent to and in direct contact with the second major surface. The bushing can further include an adhesive layer overlying the multilayered metallic substrate. The bushing can further include a fluoropolymer sliding layer overlying and in direct contact with the adhesive layer.

In a sixth aspect, a bushing includes a load bearing substrate. The load bearing substrate has a first major surface, a second major surface, and an edge. In one embodiment, the load bearing substrate has a thickness between 200 microns and 3000 microns. The bushing further includes a metal containing layer overlying and in direct contact with the first major surface. The metal containing layer can have a thickness between 20 microns and 300 microns. The bushing further includes a sliding layer overlying the first or the second major surface.

In a seventh aspect, a bushing includes a load bearing substrate. The load bearing substrate has a first major surface, a second major surface, and an edge. In one embodiment, the load bearing substrate has a thickness between 200 microns and 3000 microns. The bushing further includes a corrosion prevention layer overlying and in direct contact with the first major surface. The corrosion prevention layer can have a thickness between 20 microns and 300 microns. In one embodiment, the corrosion prevention layer can include a metal selected from magnesium, aluminum, titanium, scandium, zinc, or any combination thereof. The bushing further includes a sliding layer overlying the first or the second major surface.

In an eight aspect, a sliding article comprises a load bearing substrate, a coating, and a sliding layer. The loadbearing substrate has a first major surface, a second major surface, and an edge. The load bearing substrate further comprises a thickness $t_1$. The coating can overlie and can be in direct contact with the first major surface. The coating includes an elemental metal that may have a Pauling electronegativity of less than 1.83. The coating has a thickness $t_2$. In at least one embodiment, $t_2$ is at least 10 $\mu$m. The sliding layer can overlie the first major surface or the second major surface. In at least one embodiment the ratio of $t_2/t_1$ is at least 1/10, or $t_1 \leq 10\, t_2$.

In a ninth aspect, a hinge assembly can include a first hinge portion and a second hinge portion, a pin joining the first hinge portion with the second hinge portion, and a bushing. The bushing can include a loadbearing substrate, a coating, and a sliding layer. The loadbearing substrate can have a first major surface, a second major surface opposite the first major surface, and an edge. The loadbearing substrate includes a thickness $t_1$. The coating can overlie and can be in direct contact with the first major surface. The coating may include an elemental metal that has a Pauling electronegativity of less than 1.83. The coating has a thickness $t_2$. In at least one embodiment, $t_2$ is at least 10 $\mu$m. The sliding layer can overlie the first major surface or the second major surface. A ratio of $t_2/t_1$ can be at least 1/10.

In a tenth aspect, a bushing comprises a porous metallic layer. The porous metallic layer can be formed from a first and a second composition. The first composition can include iron. The second composition can include a metal having an electronegativity less than iron. The bushing can further include a sliding layer.

In an eleventh aspect, a hinge assembly can include a first hinge portion and a second hinge portion. The hinge assembly can further include a pin. The pin can join the first and the second hinge portions. The hinge assembly can further include a bushing. The bushing comprises a porous metallic layer. The porous metallic layer can be formed from a first and a second composition. The first composition can include iron. The second composition can include a metal having an electronegativity less than iron. The bushing can further include a sliding layer.

In a twelfth aspect, a method for preparing a bushing includes providing a metal wire or a metal sheet, the metal wire or metal sheet comprising iron. The method further includes applying a metal containing composition onto the metal wire or metal sheet to form a metal precursor. The method can further include forming a mesh or an expanded sheet from the metal precursor. The method can further include applying a sliding layer onto the mesh or the expanded sheet to form a stack. The method can further include calendaring the stack. The method can further include cutting a blank from the laminate. The method can further include forming a semi-finished bushing from the blank.

BRIEF DESCRIPTION OF THE DRAWINGS

The present disclosure may be better understood, and its numerous features and advantages made apparent to those skilled in the art by referencing the accompanying drawings.

FIGs. 1A through 1D are illustrations of the layer structure of exemplary corrosion resistant bushings.
FIGs. 2A and 2B is an illustration and detail of an exemplary hinge.
FIGs. 3A and 3B are illustrations of SEM scans.
FIG. 4 illustrates various embodiments of bushing applications.
FIG. 5 illustrates a wire comprising a core metal and a coating.
FIG. 6 illustrates a laminate for an exemplary corrosion resistant bushing.
FIG. 7 illustrates a stretch metal for an corrosion resistant bushing.

The use of the same reference symbols in different drawings indicates similar or identical items.

DETAILED DESCRIPTION OF THE PREFERRED EMBODIMENT(S)

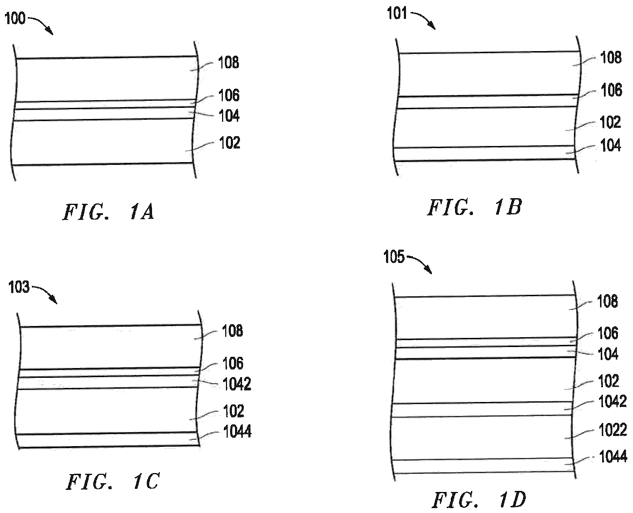

FIG. 1A shows a cross section illustrating the various layers of the corrosion resistant bushing, generally designated 100. Bushing 100 can include a load bearing substrate 102. The load bearing substrate 102 is a metallic support layer that is able to cope with high strain or high pressure. The load bearing substrate 102 can be susceptible to corrosion. The metallic support layer 102 can include a metal or metal alloy such as steel including carbon steel, spring steel, and the like, iron, or any combination thereof. In a particular embodiment, the load bearing substrate 102 can be a metal (including metal alloys), such as ferrous alloys. In one further embodiment, the load bearing substrate 102 is selected from an iron-containing substrate, a tin-containing substrate, a copper-containing substrate, a titanium-containing substrate, or any combination thereof. The load bearing substrate 102 is coated with a corrosion protection layer 104. The corrosion protection layer 104 can include aluminum or an aluminum alloy.

The load bearing substrate 102 has a thickness $t_1$. In an embodiment, $t_1$ is at least 50 microns, at least 80 microns, at least 100 microns, at least 150 microns, at least 200 microns, or at least 300 microns. In another embodiment,

$t_1$ is not greater than 800 microns, not greater than 700 microns, not greater than 650 microns, not greater than 600 microns, not greater than 550 microns, not greater than 500 microns, not greater than 480 microns, not greater than 460 microns, not greater than 440 microns, or not greater than 420 microns. In yet one further embodiment, $t_1$ ranges from 50 microns to 800 microns, such as from 100 microns to 600 microns, from 200 microns to 500 microns, or from 300 microns to 450 microns. In one particular embodiment, $t_1$ ranges from 380 microns to 420 microns.

The load bearing substrate is highly resilient to mechanical forces. In one embodiment, the load bearing substrate has a tensile strength of at least 120 MPa, at least 140 MPa, 160 MPa, at least 180 MPa, at least 200 MPa, at least 220 MPa, or at least 240 MPa. In yet one further embodiment, the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa. In another embodiment, the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Load bearing substrates as described above often have a susceptibility to corrosion. Corrosion susceptibility can be tested according to neutral salt spray test ISO 9227:2006. In the absence of any corrosion protection, load bearing substrates that include iron, such as steel show red corrosion after 5 hrs of salt spraying.

The metal containing layer 104 has a thickness $t_2$. In one embodiment, $t_2$ can be at least 20 microns, at least 25 microns, at least 30 microns, at least 35 microns, at least 40 microns, at least 45 microns, or at least 50 microns. In another embodiment, $t_2$ is not greater than 200 microns, not greater than 180 microns, not greater than 160 microns, not greater than 140 microns, not greater than 120 microns, not greater than 100 microns, not greater than 90 microns, not greater than 80 microns, not greater than 70 microns, or not greater than 60 microns. In yet one further embodiment, $t_2$ is in a range from 20 microns to 200 microns, in a range from 25 microns to 180 microns, in a range from 30 microns to 120 microns, or in a range from 40 microns to 80 microns. In one particular embodiment, $t_2$ is between 45 microns and 50 microns.

In one embodiment, the metal containing layer has a tensile strength of at least 50 MPa, at least 55 MPa, 60 MPa, at least 65 MPa, at least 70 MPa, at least 75 MPa, or at least 80 MPa. In another embodiment, the metal containing layer has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Addressing the aluminum content of the metal containing layer, in one embodiment, the metal containing layer has an aluminum content at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%. In another embodiment, the aluminum content is not greater than 99.99999 wt%, not greater than 99.99 wt%, not greater than 99.95 wt%, not greater than 99.9 wt%, not greater than 99.85 wt%, not greater than 99.8 wt%, not greater than 99.5 wt%, not greater than 99 wt%, not greater than 98 wt%, not greater than 95 wt%, not greater than 93 wt%, not greater than 85 wt%, not greater than 80 wt%, not greater than 70 wt%, or not greater than 60 wt%. In one embodiment, the metal containing layer has an aluminum content in a range from 25 wt% to 99.99999 wt%, in a range from 50 wt% to 99.99 wt%, in a range from 90 wt% to 99.99 wt%, or in a range from 95 wt% to 99.9 wt%.

As discussed above, the metal containing layer can have an aluminum content that is not the majority component. Thus, the aluminum content can be not greater than 50 wt%, not greater than 45 wt%, not greater than 40 wt%, not greater than 35 wt%, not greater than 30 wt%, or not greater than 25 wt%. For example, in one embodiment, the metal containing layer can contain another metal selected from the group of lithium, beryllium, sodium, magnesium, scandium, titanium, vanadium, chromium, manganese, iron, cobalt, nickel, copper, silicon, and zinc. In one particular embodiment, the metal containing layer includes an aluminum magnesium alloy, such as $Al_xMg_y$, wherein x is selected from 0.1, 0.2, 0.25, 0.33, 0.5, and x+y=1.

In yet another embodiment the metal containing layer can be replaced by a coating. The coating can include an elemental metal that has a Pauling electronegativity of less than the Pauling electronegativity of iron. In one embodiment, the elemental metal may have a Pauling electronegativity of less than 1.83. In another embodiment, the elemental metal can be selected from beryllium, magnesium, lithium, sodium, scandium, titanium, vanadium, chromium, manganese, zinc, aluminum, or any combination or alloys thereof. In another embodiment, the elemental metal is selected from magnesium, aluminum, zinc, an alloy comprising magnesium, aluminum, or zinc, or any combination thereof.

In yet one further embodiment, the metal containing layer has a structured surface. For example, the metal containing layer has a structured surface comprising wall-like depressions, wall-like elevations, or any combination thereof. The wall-like depressions or wall-like elevations can have a height in a range of 0.1 microns to 30 microns, in a range of 1 micron to 20 microns, or 2 microns to 15 microns. In one embodiment, the structured surface can include regular polygon patterns, such as triangular patterns, rectangular patterns, square patterns, pentagon patterns, hexagon patterns, higher polygon patterns, and combination thereof. The patterns can be depressions into the aluminum layer, elevations from the aluminum layer, or combination thereof. In one particular embodiment, the metal containing layer has a honeycomb structured surface. In one further embodiment, the surface structures can have irregular patterns. In yet another embodiment, the metal containing layer has a surface roughness of at least 1 micron, at least 2 microns, at least 3 microns, at least 4 microns, or at least 5 microns. In another embodiment, the metal containing layer has a surface roughness of not greater than 20 microns, not greater than 15 microns, not greater than 12 microns, not greater than 10 microns, or not greater than 8 microns.

In order to obtain maximum corrosion resistance a minimum ratio of $t_2/t_1$ is necessary. In one embodiment, the ration of $t_2/t_1$ is at least 1/10. In order to maintain the tensile strength of the load bearing substrate 102, the ratio $t_1/t_2$ needs to remain below a maximum. In one embodiment, the ratio of $t_2/t_1$ is not greater than 1/3, not greater than ¼, not greater than 1/5, not greater than 1/6, not greater than 1/7, not greater than 1/8, or not greater than 1/9. In yet one further embodiment, the ratio of $t_2/t_1$ is in a range from 1/10 to ¼, in a range from 1/10 to 1/5, or in a range from 1/9 to 1/7.

In one further embodiment, layer 104 is a corrosion prevention layer. The corrosion prevention layer can include a metal selected from magnesium, aluminum, titanium, scandium, zinc, or any combination thereof. In one embodiment, the corrosion prevention layer consists essentially of the metal. In another embodiment, the corrosion prevention layer is substantially free of iron. In one further embodiment, the corrosion prevention layer consists essentially of magnesium. The corrosion prevention layer can consists essentially of a metal having an electronegativity of less than 1.70.

The corrosion prevention layer can have a thickness between 20 and 300 microns. In another embodiment, the corrosion prevention layer can have a thickness ratio to the loadbearing substrate as outlined and described herein.

A sliding layer 108 can be applied to the metal containing layer 104 with an adhesive layer 106. The sliding layer 108 can include a polymer, such as a fluoropolymer. Examples of polymers that can be used in sliding layer 108 include polytetrafluoroethylene (PTFE), fluorinated ethylene-propylene (FEP), polyvinylidenfluoride (PVDF), polychlorotrifluoroethylene (PCTFE), ethylene chlorotrifluoroethylene (ECTFE), perfluoroalkoxypolymer (PFA), polyacetal (POM), polybutylene terephthalate (PBT), polyimide (PI), polyamidimide (PAI), polyetherimide, polyetheretherketone (PEEK), polyethylene, such as ultrahigh molecular weight polyethylene (UHMWPE), polysulfone, polyamide, polyphenylene oxide, polyphenylene sulfide (PPS), polyurethane, polyester, or any combination thereof.

Additionally, the sliding layer 108 can include fillers, such as a friction reducing filler. Examples of fillers that can be used in the sliding layer 108 include glass, glass fibers, carbon, carbon fibers, silicon, graphite, PEEK, molybdenum disulfide, aromatic polyester, carbon particles, bronze, fluoropolymer, thermoplastic fillers, silicon carbide, aluminum oxide, polyamidimide (PAI), polyimide (PI), PPS, polyphenylene sulfone (PPSO2), liquid crystal polymers (LCP), aromatic polyesters (Econol), and mineral particles such as wollastonite, $CaF_2$, and barium sulfate, or any combination thereof. Fillers can be in the form of beads, fibers, powder, mesh, fleece, or any combination thereof.

Addressing the thickness of the sliding layer, in one embodiment, the sliding layer has a thickness of at least about 0.05 mm, such as at least about 0.1 mm, at least about 0.15 mm, at least about 0.2 mm, at least about 0.25 mm, at least about 0.3 mm, at least about 0.35 mm, at least about 0.4 mm, or at least about 0.45 mm. In another embodiment, the sliding layer has a thickness of not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm. In one embodiment, the sliding layer has a thickness in a range between 0.05 mm and 2 mm, in a range between 0.2 mm and 1 mm, or in a range between 0.3 mm and 0.7 mm.

In addressing the tensile strength of the loadbearing substrate and the metal containing layer, in one embodiment, the combined tensile strength of the load bearing substrate and the metal containing is at least 70% of the tensile strength of the load bearing substrate, at least 75% of the tensile strength of the load bearing substrate, at least 80% of the tensile strength of the load bearing substrate, at least 80% of the tensile strength of the load bearing substrate, at least 85% of the tensile strength of the load bearing substrate, at least 90% of the tensile strength of the load bearing substrate, at least 95% of the tensile strength of the load bearing substrate, at least 98% of the tensile strength of the load bearing substrate, at least 99% of the tensile strength of the load bearing substrate, at least 99.9% of the tensile strength of the load bearing substrate, or at least 99.99% of the tensile strength of the load bearing substrate.

In an embodiment, the sliding layer 108 may include a woven mesh or an expanded metal grid. The woven mesh or expanded metal grid can include a metal or metal alloy such as aluminum, steel, stainless steel, bronze, or the like. Alternatively, the woven mesh can be a woven polymer mesh. In an alternate embodiment, the sliding layer may not include a mesh or grid. In another alternate embodiment, the woven mesh, a fleece or expanded metal grid may be embedded between adhesive layers 106 and sliding layer 108.

In one embodiment, the expanded metal layer has a mesh size of at least 10 mesh/inch, such as at least 11 mesh/inch, at least 13 mesh/inch, at least 15 mesh/inch, at least 17 mesh/inch, at least 19 mesh/inch, or at least 21 mesh/inch. In another embodiment, the expanded metal layer has a thickness of at least 0.1 mm, such as at least 0.2 mm, at least 0.3 mm, at least 0.4 mm, at least 0.5 mm, or at least 0.6 mm. In yet another embodiment, the expanded metal layer has a thickness of not greater than 1 mm, not greater than 0.9 mm, not greater than 0.8 mm, not greater than 0.7 mm, not greater than 0.6 mm, not greater than 0.55 mm, or not greater than 0.5 mm.

Returning to FIG. 1, adhesive layer 106 can be a hot melt adhesive. Examples of adhesive that can be used in adhesive layer 106 include fluoropolymers, an epoxy resins, a polyimide resins, a polyether/polyamide copolymers, ethylene vinyl acetates, Ethylene tetrafluoroethylene (ETFE), ETFE copolymer, perfluoroalkoxy (PFA), or any combination thereof. Additionally, the adhesive layer 106 can include at least one functional group selected from -C=O, -C-O-R, -COH, -COOH, -COOR,-$CF_2$=CF-OR, or any combination thereof, where R is a cyclic or linear organic group containing between 1 and 20 carbon atoms. Additionally, the adhesive layer 106 can include a copolymer. In an embodiment, the hot melt adhesive can have a melting temperature of not greater than about 250°C, such as not greater than about 220°C. In another embodiment, the adhesive layer 112 may break down above about 200°C, such as above about 220°C. In further embodiments, the melting temperature of the hot melt adhesive can be higher than 250°C, even higher than 300°C.

Referring to FIG. 1B, in another embodiment, the metal containing layer 104 is located adjacent to the loadbearing substrate and opposite to the sliding layer 108. In those embodiments, the metal containing layer serves as a corrosion resistant layer or a passivation layer. In an assembly, the metal containing layer 104 as shown in FIG. 1B contacts another metal part. Layer 104 acts as a sacrificial anode to protect the assembly from corrosion.

Referring to FIG. 1C, another embodiment includes the presence of two metal containing layers 1042 and 1044 adjacent to the loadbearing substrate overlying opposite surfaces of the loadbearing substrate 102. In this embodiment, layer 1042 can have a thickness $t_2$ and layer 1044 can have a thickness $t_3$. Layers 1042 and 1044 can be the same or differ in thickness, aluminum content, or surface structure.

With respect to FIG. 1C, a ratio of $(t_2+t_3)/t_1$ is at least 1/10. In another embodiment, the ratio of $(t_2+t_3)/t_1$ is not greater than 1/3, not greater than 2/7, not greater than ¼, not greater than 2/9, or not greater than 1/5. In yet another embodiment, the ratio of $(t_2+t_3)/t_1$ is in a range from 1/10 to 1/3, in a range from 1/8 to 1/3, or in a range from 1/5 to 1/3.

Referring to FIG. 1D, in another embodiment, a load bearing substrate can include load bearing metal layers 102 and 1022, which can be the same or different in metal type, thickness, and composition. The loadbearing substrate can include metal containing layers 104, 1042, and 1044, which, as well, can be the same or differ in thickness, aluminum content, and surface structure.

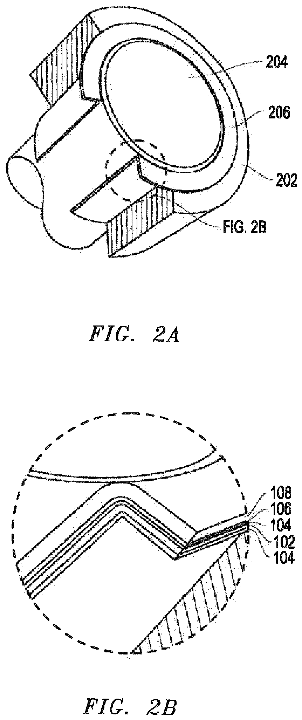

Laminates as shown in FIGs 1A-1D find applications as bushings. One example of such bushing is illustrated in FIGs. 2A and 2B. Referring to FIG. 2A, an assembly includes an outer component 202 and an inner component 204 and a bushing 206 placed between components 202 and 204. The bushing can have flange extending radially outward and overlying the outer component. For illustrative purpose, FIG. 2A discloses only a section of the bushing 206. In embodiments, the bushing 206 can form a closed cylinder. In another embodiment, the bushing 206 can be a cylinder including a slit that extends from the first axial end to the second axial end.

FIG. 2B discloses a detail of bushing 206, showing all the layers discussed herein with two metal containing layers 104 sandwiching, loadbearing substrate 102. In any embodiment, the bushing 206 has an edge that is exposed to the environment.

In one embodiment, the bushing can further include a functional layer adjacent to the loadbearing substrate opposite to the sliding layer. In one embodiment, the functional layer can be an additional sliding layer, an elastomeric layer, or a combination thereof. For the functional layer being an elastomeric layer, the elastomeric layer can include nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

For the elastomeric layer, the firm bond between the support material and elastic layer can be produced by means of a vulcanization process at a temperature of about 150-250°C. Here, crosslinking can occur within the elastomer and with the surface of the support material which has been activated by the bonding agent. The bonding layer which is thus present between support material and elastic layer can comprise at least one reactive polymer, in particular a polymer based on silane, and/or pigments in a solvent, in particular in methyl isobutyl ketone, in xylene, in ethanol and water or in ethanol and methyl ethyl ketone.

Turning to the method of forming the bushing, the sliding layer can be glued to the load bearing substrate using a melt adhesive to form a laminate sheet. The laminate sheet can be cut into strips or blanks that can be formed into the bushing. Cutting the laminate sheet can create cut edges including an exposed portion of the load bearing substrate. The blanks can be formed into the bushing, such as by rolling and flanging the laminate to form a semi-finished bushing of a desired shape.

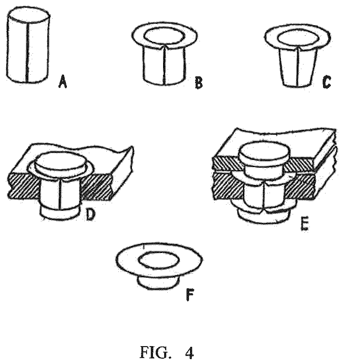

Fig. 4 depicts exemplary shapes or applications of the bushing. For example, the bushing can be a plain cylinder (4A), or include a flange (4B). In another embodiment, the bushing can be conical with a flange (4C) or without a flange (not shown). Embodiment 4D depicts a bushing with an inner element and an outer element. Embodiment 4E depicts a bushing with an inner element separated from a first outer element by the bushing but in contact with a second outer element adjacent to the first outer element; a bushing flange separates the first and second outer elements. For example, door hinges can fall into the scope of embodiment 4E. Embodiment 4F shows a flanged bushing lacking a slit, which is usually present after shaping.

In an embodiment, the bearing with such a corrosion resistant coating can have a significantly increased lifetime, and in particular, the bearing can have a Corrosion Resistance Rating according to neutral salt spray test ISO 9227:2006.

of at least 300 hours, at least 400 hours, at least 500 hours, at least 600 hours, at least 700 hours, at least 800 hours, at least 900 hours, at least 1000 hours, or at least 1100 hours. In another embodiment, the bushing has a corrosion resistance rating of not greater than 2000 hours, not greater than 1800 hours, not greater than 1600 hours, or not greater than 1500 hours.

Another feature of the bushings is the sizing capability of finished bushings. Sizing capacity is amount of plastic deformation the laminate of a bushing can undergo. Sizing capability is expressed in percentage decrease of wall thickness after a bushing has been deformed by an oversized pin. That is:

$$SC=(t_0-t_a)/t_0 \, ,$$

wherein SC is sizing capability, $t_0$ is the original thickness of the laminate and $t_a$ is the thickness after deformation by an oversized pin. Sizing capacity can be measured by stepwise deforming the bushing with an oversized pin. For example, a bushing can be deformed by 5% with a first pin and additional up to 5% with a second oversized pin, and up to 5% for each additional oversized pin.

In one embodiment, the bushing has sizing capability of at least 3%, at least 4%, at least 5%, at least 6%, at least 7%, at least 8%, at least 9%, at least 10%, at least 12%, at least 14%, at least 16%, or at least 18%.

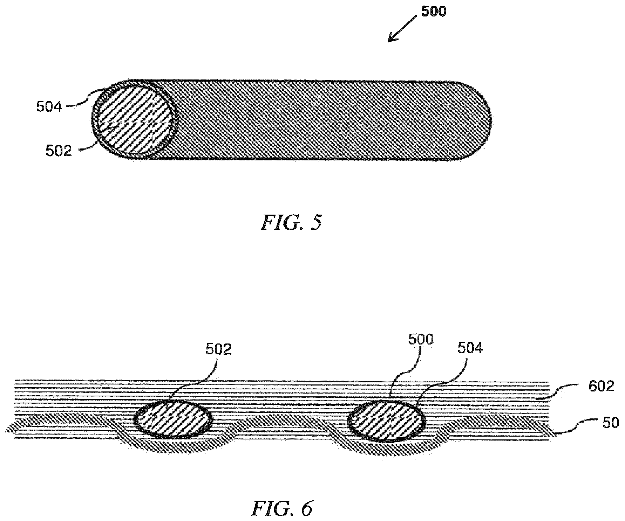

FIG. 5 depicts a wire 500. The wire has a core 502 of a metal comprising iron. In one embodiment, the core 502 can include iron, an iron alloy, or a combination thereof. In another embodiment, core 502 is steel. The wire 500 further includes a coating 504 substantially covering core 502. In one embodiment the coating 504 includes a metal that may have a Pauling Electronegativity of less then iron. In one embodiment, the coating can include a lacquer including metal particles of a metal with a Pauling Electronegativity less than iron. In another embodiment, the coating can include a metal foil. The coating is in direct contact with the core. In one embodiment, the coating can be applied to the core via deposition, such as chemical or physical vapor deposition, or electrochemical deposition (galvanizing). The coating can have a thickness $t_c$ that relates to the diameter $d_w$ of the wire 500. In one embodiment, $t_c/d_w$ is at least 0.001, such as at least 0.005, at least 0.01, at least 0.02, at least 0.05, at least 0.07, at least 0.1, at least 0.15, or at least 0.2. In another embodiment $t_c/d_w$ is not greater than 0.5, not greater than 0.45, not greater than 0.4, not greater than 0.35, not greater than 0.3, not greater than 0.25, or not greater than 0.2. In one embodiment, $t_c/d_w$ ranges from 0.001 to 0.25, such as from 0.005 to 0.2, or 0.01 to 0.15.

FIG. 6 depicts an exemplary laminate comprising a mesh made of wire 500. In one embodiment, the mesh can include warps and wefts made of wire 500, as depicted in FIG. 6. In other embodiments (not shown), the mesh can include wire 500 as wefts only while warp wires can include a different wire. That different wire can be made of steel only to allow higher loading capacity of the laminate. In another embodiment, the different wire can have a higher aluminum content to improve corrosion resistance. The wire 500 includes coating 504 and core 502 as described herein. The laminate further includes a sliding layer 602. Sliding layer can include the same material as described for layer 108 in FIG. 1. The mesh of wires 500 can be completely embedded in sliding layer 602 (not shown). In another embodiment, as shown in FIG. 6, the mesh can only be partly embedded in the sliding layer. Moreover, the sliding layer 602 can be affixed to the mesh of wires 500 via an adhesive layer (not shown) similar to layer 106 of FIG. 1. In one further embodiment, as shown in FIG. 6, the laminate is free of any continuous support layer. In one embodiment, the laminate consists essentially of the metal mesh, an adhesive layer, and a sliding layer. In another embodiment, the laminate consists essentially of the metal mesh and the sliding layer.

Further to the aspects of the present invention, the mesh made out of wires 500 is exemplary to the porous metallic layer. In other embodiments, the mesh can be replaced with any porous metallic layer such as a non-woven metal felt, a metal foam, or stretch metal. Each of the porous metallic layer may include an iron containing phase and a phase containing a metal having a Pauling Electronegativity that is less than the Pauling Electronegativity of iron. In one embodiment, the iron containing phase is steel. In another embodiment the second phase is metal containing. In one embodiment, the two metallic phases are heterogeneous.

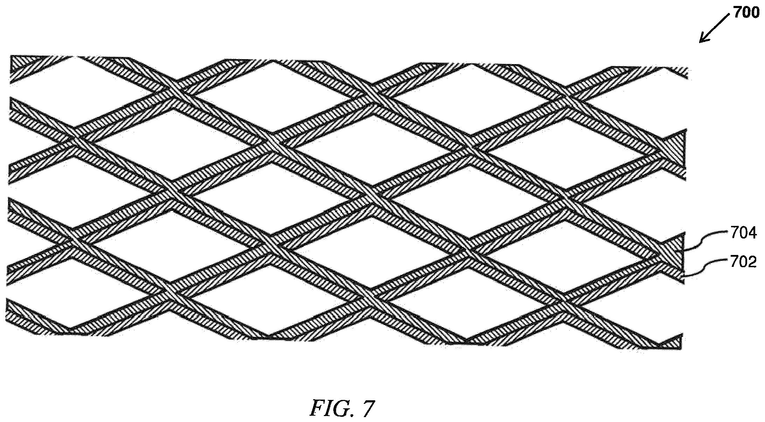

FIG. 7 depicts another example of a porous metallic layer, namely an expanded or stretch metal layer. The expanded metal layer includes a coating 704 overlying the metal sheet 702. In another embodiment (not shown in FIG. 7), the coating 704 does not cover the major surface of the metal sheet but lines the opening of the diamond-shaped openings. In yet another embodiment, the coating can partly cover the major surface of the metal sheet and partly the surface of the diamond-shaped openings. In yet one further embodiment, the coating 704 can cover both major surfaces of the stretch metal sheet. The stretch metal sheet 700 can be prepared from a solid metal sheet, such as a steel sheet, onto which a coating of a second metal of lesser electronegativity, such as aluminum is cladded on.

The following item set lists exemplary embodiments of the present disclosure.

Embodiment 1. A sliding article comprising:

a load bearing substrate, having a first major surface, a second major surface, and an edge, the load bearing having a thickness t1,
an metal containing layer overlying and in direct contact with the first major surface, the metal containing layer having a thickness t2, wherein t2 is at least 10 microns,
a sliding layer overlying the first or the second major surface,
wherein a ratio of t2/t1 is at least 1/10.

Embodiment 2. A hinge assembly comprising :

a first hinge portion and a second hinge portion;
a pin joining the first hinge portion with the second hinge portion; and
a sliding article, the sliding article comprising:

a load bearing substrate, having a first major surface, a second major surface, and an edge, the load bearing having a thickness t1,
an metal containing layer overlying and in direct contact with the first major surface, the metal containing layer having a thickness t2, wherein t2 is at least 10 microns,
a sliding layer overlying the first or the second major surface,

wherein a ratio of t2/t1 is at least 1/10.

Embodiment 3. The sliding article or hinge assembly according to any one of embodiments 1 or 2 further comprising an additional metal containing layer overlying and in direct contact with the second major surface, the additional metal containing layer having a thickness t3.

Embodiment 4. The sliding article or hinge assembly according to any one of the preceding embodiments further comprising a functional layer overlying the load bearing substrate opposite the sliding layer.

Embodiment 5. The sliding article or hinge assembly according to embodiment 4, wherein the functional layer is a second sliding layer.

Embodiment 6. The sliding article or hinge assembly according to embodiment 4, wherein the functional layer is an elastomeric layer.

Embodiment 7. The sliding article or hinge assembly according to embodiment 6, wherein the elastomeric layer includes at least one of nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

Embodiment 8. The sliding article or hinge assembly according to embodiment 3, wherein a ratio of (t2+t3)/t1 is not greater than 1/3, not greater than 2/7, not greater than ¼, not greater than 2/9, or not greater than 1/5.

Embodiment 9. The sliding article or hinge assembly according to embodiment 3, wherein a ratio of (t2+t3)/t1 is in a range from 1/10 to 1/3, in a range from 1/8 to 1/3, or in a range from 1/5 to 1/3.

Embodiment 10. The sliding article or hinge assembly according to any one of the preceding embodiments, wherein the ratio of t2/t1 is not greater than 1/3, not greater than ¼, not greater than 1/5, not greater than 1/6, not greater than 1/7, not greater than 1/8, or not greater than 1/9.

Embodiment 11. The sliding article or hinge assembly according to any one of the preceding embodiments, wherein the ratio of t2/t1 is in a range from 1/10 to 1/3, in a range from 1/10 to 1/5, or in a range from 1/9 to 1/7.

Embodiment 12. The sliding article or hinge assembly according to any one of the preceding embodiments, wherein t2 is at least 25 microns, at least 30 microns, at least 35 microns, at least 40 microns, at least 45 microns, or at least 50 microns.

Embodiment 13. The sliding article or hinge assembly according to any one of the preceding embodiments, wherein t2 is not greater than 200 microns, not greater than 180 microns, not greater than 160 microns, not greater than 140 microns, not greater than 120 microns, not greater than 100 microns, not greater than 90 microns, not greater than 80 microns, not greater than 70 microns, or not greater than 60 microns.

Embodiment 14. The sliding article or hinge assembly according to any one of the preceding embodiments, wherein t2 is in a range from 20 microns to 200 microns, in a range from 25 microns to 180 microns, in a range from 30 microns to 120 microns, or in a range from 40 microns to 80 microns.

Embodiment 15. The sliding article or hinge assembly according to any one of the preceding embodiments, wherein t1 is at least 50 microns, at least 80 microns, at least 100 microns, at least 150 microns, at least 200 microns, at least 300 microns, at least 400 microns, at least 500 microns, at least 600 microns, at least 800 microns, at least 1000 microns, at least 1200 microns, at least 1400 microns, at least 1600 microns, at least 1800 microns, or at least 2000 microns.

Embodiment 16. The sliding article or hinge assembly according to any one of the preceding embodiments, wherein t1 is not greater than 2200 microns, not greater than 2000 microns, not greater than 1800 microns, not greater than 1600 microns, not greater than 1400 microns, not greater than 1200 microns, not grater than 1000 microns, not greater than 800 microns, not greater than 700 microns, not greater than 650 microns, not greater than 600 microns, not greater than 550 microns, not greater than 500 microns, not greater than 480 microns, not greater than 460 microns, not greater than 440 microns, or not greater than 420 microns.

Embodiment 17. The sliding article or hinge assembly according to any one of the preceding embodiments, wherein t1 is in a range from 50 microns to 2000 microns, in a range from 100 microns to 1000 microns, in a range from 200 microns to 500 microns, or in a range from 300 microns to 450 microns.

Embodiment 18. The sliding article or hinge assembly according to any one of the preceding embodiments, wherein the load bearing substrate contains a metal selected from an iron, tin, copper, zinc, titanium, scandium, vanadium, chromium, manganese, cobalt, nickel, or any combination thereof.

Embodiment 19. The sliding article or hinge assembly according to embodiment 18, wherein the iron-containing substrate comprises steel.

Embodiment 20. The sliding article or hinge assembly according to any one of the preceding embodiments, wherein the load bearing substrate is selected from a steel substrate, a brass substrate, a bronze substrate, or a combination thereof.

Embodiment 21. The sliding article or hinge assembly according to any one of the preceding embodiments, wherein the load bearing substrate comprises a steel substrate.

Embodiment 22. The sliding article or hinge assembly according to any one of the preceding embodiments, wherein the load bearing substrate consists essentially of a steel substrate.

Embodiment 23. The sliding article or hinge assembly according to any one of the preceding embodiments, wherein the load bearing substrate has a tensile strength of at least 120 MPa, at least 140 MPa, 160 MPa, at least 180 MPa, at least 200 MPa, at least 220 MPa, or at least 240 MPa.

Embodiment 24. The sliding article or hinge assembly according to any one of the preceding embodiments, wherein the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa.

Embodiment 25. The sliding article or hinge assembly according to any one of the preceding embodiments, wherein the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Embodiment 26. The sliding article or hinge assembly according to any one of the preceding embodiments, wherein the metal containing layer has a tensile strength of at least 50 MPa, at least 55 MPa, 60 MPa, at least 65 MPa, at least 70 MPa, at least 75 MPa, or at least 80 MPa.

Embodiment 27. The sliding article or hinge assembly according to any one of the preceding embodiments, wherein the metal containing layer has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Embodiment 28. The sliding article or hinge assembly according to any one of the preceding embodiments, wherein the metal containing layer has an aluminum content of at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%.

Embodiment 29. The sliding article or hinge assembly according to any one of the preceding embodiments, wherein the combined tensile strength of the load bearing substrate and the metal containing is at least 70% of the tensile strength of the load bearing substrate, at least 75% of the tensile strength of the load bearing substrate, at least 80% of the tensile strength of the load bearing substrate, at least 80% of the tensile strength of the load bearing substrate, or at least 85% of the tensile strength of the load bearing substrate.

Embodiment 30. The sliding article or hinge assembly according to any one of the preceding embodiments, wherein the metal containing layer has content of magnesium of at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%.

Embodiment 31. The sliding article or hinge assembly according to any one of the preceding embodiments, wherein the metal containing layer has an aluminum content of not greater than 99.99999 wt%, not greater than 99.99 wt%, not greater than 99.95 wt%, not greater than 99.9 wt%, not greater than 99.85 wt%, not greater than 99.8 wt%, not greater than 99.5 wt%, not greater than 99 wt%, not greater than 98 wt%, not greater than 95 wt%, not greater than 93 wt%, or not greater than 85 wt%.

Embodiment 32. The sliding article or hinge assembly according to any one of the preceding embodiments, wherein the metal containing layer has an aluminum content in a range from 25 wt% to 99.99999 wt%, in a range from 50 wt% to 99.99 wt%, in a range from 90 wt% to 99.99 wt%, or in a range from 95 wt% to 99.9 wt%.

Embodiment 33. The sliding article or hinge assembly according to any one of the preceding embodiments, wherein the sliding layer comprises a fluoroploymer.

Embodiment 34. The sliding article or hinge assembly according to any one of the preceding embodiments, wherein the sliding layer comprises a polytetrafluoroethylene (PTFE), a modified PTFE (TFM), a fluorinated ethylene propylene (FEP), a polyvinylidene fluoride (PVDF), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), a perfluoro methyl alkoxy (MFA), polyoxymethylene (POM), polyethylene (PE), UHMWPE, or a mixture thereof.

Embodiment 35. The sliding article or hinge assembly according to any one of the preceding embodiments, wherein the sliding layer comprises a polytetrafluoroethylene compound layer.

Embodiment 36. The sliding article or hinge assembly according to any one of the preceding embodiments, wherein the sliding layer consists essentially of a polytetrafluoroethylene compound layer.

Embodiment 37. The sliding article or hinge assembly according to any one of the preceding embodiments, wherein the sliding layer has a thickness of at least about 0.01 mm, at least about 0.05 mm, at least about 0.1 mm, at least about 0.15 mm, at least about 0.2 mm, at least about 0.25 mm, at least about 0.3 mm, at least about 0.35 mm, at least about 0.4 mm, or at least about 0.45 mm.

Embodiment 38. The sliding article or hinge assembly according to any one of the preceding embodiments, wherein the sliding layer has a thickness of not greater than about 5 mm, not greater than about 4 mm, not greater than about 3 mm, not greater than about 2.5 mm, not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm.

Embodiment 39. The sliding article or hinge assembly according to any one of the preceding embodiments, wherein the sliding layer has a thickness in a range between 0.05 mm and 5 mm, in a range between 0.2 mm and 2 mm , or in a range between 0.3 mm and 1 mm,

Embodiment 40. The sliding article or hinge assembly according to any one of the preceding embodiments further comprising an adhesive layer adjacent to the sliding layer.

Embodiment 41. The sliding article or hinge assembly according to embodiment 40, wherein the adhesive layer comprises a thermoplastic.

Embodiment 42. The sliding article or hinge assembly according to embodiment 41, wherein the thermoplastic comprises tetrafluoroethylene-hexafluoropropylene (FEP), perfluoroalkoxyethylene (PFA), polyimide (PI), polyamidimide (PAI), polyphenylene sulfide (PPS), polyphenylene sulfone (PPSO2), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (TFM), polyvinylidene fluoride (PVDF), ethylene-chlorotrifluoroethylene (ECTFE), polyethersulfone (PES), polyetherketone (PEK), polyethylene (PE), UHMWPE, or any combination thereof.

Embodiment 43. The sliding article or hinge assembly according to embodiment 41, wherein the adhesive layer consists essentially of a thermoplastic selected from the group of tetrafluoroethylene-hexafluoropropylene (FEP), perfluoroalkoxyethylene (PFA), and a combination thereof.

Embodiment 44. The sliding article or hinge assembly according to embodiment 41, wherein the thermoplastic includes a modified thermoplastic comprising at least one of the group selected from C(=O)R, C-O-R, COOH, COOR, COH, ore any combination thereof, wherein R are cyclic or linear organic residues having from 1 to 20 carbon atoms.

Embodiment 45. The sliding article or hinge assembly according to any one of the preceding embodiments further comprising a discontinuous metal layer adjacent to the first major surface.

Embodiment 46. The sliding article or hinge assembly according to embodiment 45, wherein the discontinuous metal layer comprises aluminum, an aluminum alloy, a steel metal, a steel cladded or coated with an metal containing layer, or a combination thereof.

Embodiment 47. The sliding article or hinge assembly according to embodiment 45, wherein the discontinuous metal layer is selected from an expanded metal, a mesh, a fleece, a foam, or any combination thereof.

Embodiment 48. The sliding article or hinge assembly according to embodiment 45, wherein the discontinuous metal layer has a mesh size of at least 10 mesh/inch, such as at least 11 mesh/inch, at least 13 mesh/inch, at least 15 mesh/inch, at least 17 mesh/inch, at least 19 mesh/inch, or at least 21 mesh/inch.

Embodiment 49. The sliding article or hinge assembly according to embodiment 45, wherein the discontinuous metal layer has a thickness of at least 0.1 mm, such as at least 0.2 mm, at least 0.3 mm, at least 0.4 mm, at least 0.5 mm, or at least 0.6 mm.

Embodiment 50. The sliding article or hinge assembly according to embodiment 45, wherein the discontinuous metal layer has a thickness of not greater than 1 mm, not greater than 0.9 mm, not greater than 0.8 mm, not greater than 0.7 mm, not greater than 0.6 mm, not greater than 0.55 mm, or not greater than 0.5 mm.

Embodiment 51. The sliding article or hinge assembly according to any one of the preceding embodiments, wherein the metal containing layer has a structured surface.

Embodiment 52. The sliding article or hinge assembly according to any one of the preceding embodiments, wherein the metal containing layer has a structured surface comprising wall-like depressions, wall-like elevations, or any combination thereof.

Embodiment 53. The sliding article or hinge assembly according to embodiment 52, wherein the wall-like depressions or wall-like elevations have a height in a range of 0.1 microns to 200 microns, in a range of 1 micron to 50 microns, or 2 microns to 30 microns.

Embodiment 54. The sliding article or hinge assembly according to any one of the preceding embodiments, wherein the metal containing layer has a polygon structure.

Embodiment 55. The sliding article or hinge assembly according to embodiment 54, wherein the polygon structure is regular or non-regular.

Embodiment 56. The sliding article or hinge assembly according to embodiment 54, wherein the polygon structure is a honeycomb structure.

Embodiment 57. The sliding article or hinge assembly according to any one of the preceding embodiments, wherein the metal containing layer has a surface roughness of at least 1 micron, at least 2 microns, at least 3 microns, at least 4 microns, or at least 5 microns.

Embodiment 58. The sliding article or hinge assembly according to any one of the preceding embodiments, wherein the metal containing layer has a surface roughness of not greater than 20 microns, not greater than 15 microns, not greater than 12 microns, not greater than 10 microns, or not greater than 8 microns.

Embodiment 59. The sliding article or hinge assembly according to any one of the preceding embodiments further comprising an aluminous layer overlying the edges.

Embodiment 60. The sliding article or hinge assembly according to embodiment 51, wherein the aluminous layer comprises Al2O3.

Embodiment 61. The sliding article or hinge assembly according to embodiment 51, wherein the aluminous layer has a thickness of not greater than 5 microns, not greater than 4 microns, not greater than 3 microns, not greater than 2 microns, not greater than 1.5 microns, not greater than 1 micron, not greater than 0.9 microns, not greater than 0.8 microns, not greater than 0.7 microns, not greater than 0.6 microns, or not greater than 0.5 microns.

Embodiment 62. The sliding article or hinge assembly according to any one of the preceding embodiments, wherein the sliding article has a corrosion resistance rating according to neutral salt spray test ISO 9227:2006, of at least 300 hours, at least 400 hours, at least 500 hours, at least 600 hours, at least 700 hours, at least 800 hours, at least 900 hours, at least 1000 hours, or at least 1100 hours.

Embodiment 63. The sliding article or hinge assembly according to any one of the preceding embodiments, wherein the sliding article has a corrosion resistance rating of not greater than 1 million hours, not greater than 100 000 hours, or not greater than 10000 hours.

Embodiment 64. The sliding article or hinge assembly according to any one of the preceding embodiments, wherein the sliding article has sizing capability of at least 3%, at least 4%, at least 5%, at least 6%, at least 7%, at least 8%, at least 10%, at least 12%, at least 14%, at least 16%, or at least 18%.

Embodiment 65. A method of preparing a bushing, the method comprising:

> providing a load bearing substrate comprising a first major surface and a second major surface;
> coating an metal containing layer over the first major surface;
> applying a sliding layer over the first major surface or the second major surface to form a laminate;
> cutting a blank from the laminate; and
> forming a semi-finished bushing from the blank.

Embodiment 66. The method according to embodiment 65, wherein the coating includes cladding, spray coating, metal spraying, mechanical coating, galvanic coating, hot-dipping, or any combination thereof.

Embodiment 67. A method of preparing a corrosion resistant iron-containing article, the method comprising:

> providing a substrate, the substrate comprising a first major surface and a second major surface, the substrate comprising an iron-containing layer, the iron-containing layer forming the first major surface, the substrate further comprising an aluminum layer, the aluminum layer overlying the first major surface;
> cutting the substrate from the aluminum layer across the first major surface to the second major surface to form a cross-section; and
> forming an aluminous layer over the cross-section.

Embodiment 68. A bushing comprising:

> a multilayered metallic substrate, the multi-layered substrate comprising
>
> > a steel layer having a first major surface and a second major surface,

a first metal containing layer adjacent to and in direct contact with the first major surface, and
a second metal containing layer adjacent to and in direct contact with the second major surface;

an adhesive layer overlying the multilayered metallic substrate;
a fluoropolymer sliding layer overlying and in direct contact with the adhesive layer.

Embodiment 69. The bushing as described in embodiment 68, characterized in that the bushing has at least one axial collar.

Embodiment 70. The bushing as described in embodiment 68 or 69, characterized in that the bushing has an essentially cylindrical shape.

Embodiment 71. The bushing as described in embodiment 68 or 69, characterized in that the bushing has a conical shape.

Embodiment 72. A bushing comprising:

a load bearing substrate, having a first major surface, a second major surface, and an edge, the load bearing having a thickness between 200 microns and 3000 microns,
an metal containing layer overlying and in direct contact with the first major surface, the metal containing layer having a thickness between 20 microns and 300 microns, and
a sliding layer overlying the first or the second major surface.

Embodiment 73. The bushing according to embodiment 72 further comprising an additional metal containing layer overlying and in direct contact with the second major surface, the additional metal containing layer having a thickness between 20 microns and 300 microns.

Embodiment 74. The bushing according to any one of embodiments 72 or 73 further comprising a functional layer overlying the load bearing substrate opposite the sliding layer.

Embodiment 75. The bushing according to embodiment 74, wherein the functional layer is a second sliding layer.

Embodiment 76. The bushing according to embodiment 74, wherein the functional layer is an elastomeric layer.

Embodiment 77. The bushing according to embodiment 76, wherein the elastomeric layer includes at least one of nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

Embodiment 78. The bushing according to any one of embodiments 72 through 77, wherein the thickness of the metal containing layer is in a range from 20 microns to 250 microns, in a range from 25 microns to 200 microns, in a range from 30 microns to 150 microns, or in a range from 40 microns to 100 microns.

Embodiment 79. The bushing according to any one of embodiments 72 through 78, wherein the thickness of the load bearing substrate is in a range from 200 microns to 2500 microns, in a range from 250 microns to 2000 microns, in a range from 300 microns to 1500 microns, or in a range from 350 microns to 1000 microns.

Embodiment 80. The bushing according to any one of embodiments 72 through 79, wherein the load bearing substrate contains a metal selected from an iron, tin, copper, zinc, titanium, scandium, vanadium, chromium, manganese, cobalt, nickel , or any combination thereof.

Embodiment 81. The bushing according to embodiment 80, wherein the iron-containing substrate comprises steel.

Embodiment 82. The bushing according to any one of embodiments 72 through 81, wherein the load bearing substrate is selected from a steel substrate, a brass substrate, a bronze substrate, or a combination thereof.

Embodiment 83. The bushing according to any one of embodiments 72 through 82, wherein the load bearing substrate consists essentially of a steel substrate.

Embodiment 84. The bushing according to any one of embodiments 72 through 83, wherein the load bearing substrate has a tensile strength of at least 120 MPa, at least 140 MPa, 160 MPa, at least 180 MPa, at least 200 MPa, at least 220 MPa, or at least 240 MPa.

Embodiment 85. The bushing according to any one of embodiments 72 through 84, wherein the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa.

Embodiment 86. The bushing according to any one of embodiments 72 through 85, wherein the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Embodiment 87. The bushing according to any one of embodiments 72 through 86, wherein the metal containing layer has a tensile strength of at least 50 MPa, at least 55 MPa, 60 MPa, at least 65 MPa, at least 70 MPa, at least 75 MPa, or at least 80 MPa.

Embodiment 88. The bushing according to any one of embodiments 72 through 87, wherein the metal containing layer has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Embodiment 89. The bushing according to any one of embodiments 72 through 88, wherein the metal containing layer has an aluminum content of at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%.

Embodiment 90. The bushing according to any one of embodiments 72 through 89, wherein the combined tensile strength of the load bearing substrate and the metal containing is at least 70% of the tensile strength of the load bearing substrate, at least 75% of the tensile strength of the load bearing substrate, at least 80% of the tensile strength of the load bearing substrate, at least 80% of the tensile strength of the load bearing substrate, or at least 85% of the tensile strength of the load bearing substrate.

Embodiment 91. The bushing according to any one of embodiments 72 through 90, wherein the metal containing layer has content of magnesium of at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%.

Embodiment 92. The bushing according to any one of embodiments 72 through 91, wherein the metal containing layer has an aluminum content of not greater than 99.99999 wt%, not greater than 99.99 wt%, not greater than 99.95 wt%, not greater than 99.9 wt%, not greater than 99.85 wt%, not greater than 99.8 wt%, not greater than 99.5 wt%, not greater than 99 wt%, not greater than 98 wt%, not greater than 95 wt%, not greater than 93 wt%, or not greater than 85 wt%.

Embodiment 93. The bushing according to any one of embodiments 72 through 77, wherein the metal containing layer has an aluminum content in a range from 25 wt% to 99.99999 wt%, in a range from 50 wt% to 99.99 wt%, in a range from 90 wt% to 99.99 wt%, or in a range from 95 wt% to 99.9 wt%.

Embodiment 94. The bushing according to any one of embodiments 72 through 93, wherein the sliding layer comprises a fluoroploymer.

Embodiment 95. The bushing according to any one of embodiments 72 through 94, wherein the sliding layer comprises a polytetrafluoroethylene (PTFE), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), polyoxymethylene (POM), polyethylene (PE), UHMWPE, or a mixture thereof.

Embodiment 96. The bushing according to any one of embodiments 72 through 95, wherein the sliding layer comprises a polytetrafluoroethylene compound layer.

Embodiment 97. The bushing according to any one of embodiments 72 through 96, wherein the sliding layer consists essentially of a polytetrafluoroethylene compound layer.

Embodiment 98. The bushing according to any one of embodiments 72 through 97, wherein the sliding layer has a thickness in a range between 0.05 mm and 5 mm, in a range between 0.2 mm and 2 mm , or in a range between 0.3 mm and 1 mm.

Embodiment 99. The bushing according to any one of embodiments 72 through 98 further comprising an adhesive layer adjacent to the sliding layer.

Embodiment 100. The bushing according to embodiment 99, wherein the adhesive layer comprises a thermoplastic.

Embodiment 101. The bushing according to embodiment 100, wherein the thermoplastic comprises tetrafluoroethylene-hexafluoropropylene (FEP), perfluoroalkoxyethylene (PFA), polyimide (PI), polyamidimide (PAI), polyphenylene sulfide (PPS), polyphenylene sulfone (PPSO2), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (TFM), polyvinylidene fluoride (PVDF), ethylene-chlorotrifluoroethylene (ECTFE), polyethersulfone (PES), polyetherketone (PEK), polyethylene (PE), UHMWPE, or any combination thereof.

Embodiment 102. The bushing according to embodiment 101, wherein the adhesive layer consists essentially of a thermoplastic selected from the group of tetrafluoroethylene-hexafluoropropylene (FEP), perfluoroalkoxyethylene (PFA), and a combination thereof.

Embodiment 103. The bushing according to embodiment 102, wherein the thermoplastic includes a modified thermoplastic comprising at least one of the group selected from C(=O)R, C-O-R, COOH, COOR, COH, ore any combination thereof, wherein R are cyclic or linear organic residues having from 1 to 20 carbon atoms.

Embodiment 104. The bushing according to any one of embodiments 72 through 103 further comprising an expanded metal layer adjacent to the first major surface.

Embodiment 105. The bushing according to embodiment 104, wherein the expanded metal layer comprises an aluminum alloy, a steel metal, a steel cladded or coated with an metal containing layer, or a combination thereof.

Embodiment 106. The bushing according to embodiment 104, wherein the expanded metal layer is embedded in a polymer matrix.

Embodiment 107. The bushing according to any one of embodiments 72 through 106, wherein the metal containing layer has a structured surface.

Embodiment 108. The according to any one of embodiments 72 through 107, wherein the metal containing layer has a structured surface comprising wall-like depressions, wall-like elevations, or any combination thereof.

Embodiment 109. The bushing according to embodiment 108, wherein the wall-like depressions or wall-like elevations have a height in a range of 0.1 microns to 200 microns, in a range of 1 micron to 50 microns, or 2 microns to 30 microns.

Embodiment 110. The bushing according to any one of embodiments 72 through 109, wherein the metal containing layer has a polygon structure.

Embodiment 111. The bushing according to embodiment 110, wherein the polygon structure is regular or non-regular.

Embodiment 112. The bushing according to embodiment 110, wherein the polygon structure is a honeycomb structure.

Embodiment 113. The bushing according to any one of embodiments 72 through 112 further comprising an aluminous layer overlying the edges.

Embodiment 114. The bushing according to any one of embodiments 72 through 113, wherein the aluminous layer comprises $Al_2O_3$.

Embodiment 115. The bushing according to embodiment 114, wherein the aluminous layer has a thickness of not greater than 5 microns, not greater than 4 microns, not greater than 3 microns, not greater than 2 microns, not greater than 1.5 microns, not greater than 1 micron, not greater than 0.9 microns, not greater than 0.8 microns, not greater than 0.7 microns, not greater than 0.6 microns, or not greater than 0.5 microns.

Embodiment 116. The bushing according to any one of embodiments 72 through 115, wherein the bushing has a corrosion resistance rating according to neutral salt spray test ISO 9227:2006, of at least 300 hours, at least 400 hours, at least 500 hours, at least 600 hours, at least 700 hours, at least 800 hours, at least 900 hours, at least 1000 hours, or at least 1100 hours.

Embodiment 117. The bushing according to any one of embodiments 72 through 116, wherein the bushing has sizing capability of at least 3%, at least 4%, at least 5%, at least 6%, at least 7%, at least 8%, at least 10%, at least 12%, at least 14%, at least 16%, or at least 18%.

Embodiment 118. A bushing comprising:

a load bearing substrate, having a first major surface, a second major surface, and an edge, the load bearing substrate having a thickness between 200 microns and 3000 microns,
a corrosion prevention layer overlying and in direct contact with the first major surface, the corrosion prevention layer having a thickness between 20 microns and 300 microns, and
a sliding layer overlying the first or the second major surface.

Embodiment 119. The bushing according to embodiment 118 further comprising an additional corrosion prevention layer overlying and in direct contact with the second major surface, the additional corrosion prevention layer having a thickness between 20 microns and 300 microns.

Embodiment 120. The bushing according to any one of embodiments 118 or 119 further comprising a functional layer overlying the load bearing substrate opposite the sliding layer.

Embodiment 121. The bushing according to embodiment 120, wherein the functional layer is a second sliding layer.

Embodiment 122. The bushing according to embodiment 120, wherein the functional layer is an elastomeric layer.

Embodiment 123. The bushing according to embodiment 122, wherein the elastomeric layer includes at least one of nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

Embodiment 124. The bushing according to any one of embodiments 118 through 123, wherein the thickness of the corrosion prevention layer is in a range from 20 microns to 250 microns, in a range from 25 microns to 200 microns, in a range from 30 microns to 150 microns, or in a range from 40 microns to 100 microns.

Embodiment 125. The bushing according to any one of embodiments 118 through 124, wherein the thickness of the load bearing substrate is in a range from 200 microns to 2500 microns, in a range from 250 microns to 2000 microns, in a range from 300 microns to 1500 microns, or in a range from 350 microns to 1000 microns.

Embodiment 126. The bushing according to any one of embodiments 118 through 125, wherein the load bearing substrate contains a metal selected from an iron, tin, copper, zinc, titanium, scandium, vanadium, chromium, manganese, cobalt, nickel, or any combination thereof.

Embodiment 127. The bushing according to embodiment 126, wherein the iron-containing substrate comprises steel.

Embodiment 128. The bushing according to any one of embodiments 118 through 127, wherein the load bearing substrate is selected from a steel substrate, a brass substrate, a bronze substrate, or a combination thereof.

Embodiment 129. The bushing according to any one of embodiments 118 through 128, wherein the load bearing substrate consists essentially of a steel substrate.

Embodiment 130. The bushing according to any one of embodiments 118 through 129, wherein the corrosion prevention layer contains a metal selected from magnesium, aluminum, titanium, scandium, zinc, or any combination thereof.

Embodiment 131. The bushing according to embodiment 130, wherein the corrosion prevention layer consists essentially of magnesium, aluminum, or a combination thereof.

Embodiment 132. The bushing according to any one of embodiments 118 through 131, wherein the corrosion prevention layer contains a metal having an electronegativity of not greater than 1.70, not greater than 1.69, not greater than 1.68, not greater than 1.67, not greater than 1.66, not greater than 1.65, not greater than 1.63, not greater than 1.60, not greater than 1.55, not greater than 1.50, or not greater than 1.45.

Embodiment 133. The bushing according to any one of embodiments 118 through 132, wherein the load bearing substrate has a tensile strength of at least 120 MPa, at least 140 MPa, 160 MPa, at least 180 MPa, at least 200 MPa, at least 220 MPa, or at least 240 MPa.

Embodiment 134. The bushing according to any one of embodiments 118 through 133, wherein the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa.

Embodiment 135. The bushing according to any one of embodiments 118 through 134, wherein the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Embodiment 136. The bushing according to any one of embodiments 118 through 135, wherein the corrosion prevention layer has a tensile strength of at least 50 MPa, at least 55 MPa, 60 MPa, at least 65 MPa, at least 70 MPa, at least 75 MPa, or at least 80 MPa.

Embodiment 137. The bushing according to any one of embodiments 118 through 136, wherein the corrosion prevention layer has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Embodiment 138. The bushing according to any one of embodiments 118 through 137, wherein the combined tensile strength of the load bearing substrate and the corrosion prevention is at least 70% of the tensile strength of the load bearing substrate, at least 75% of the tensile strength of the load bearing substrate, at least 80% of the tensile strength of the load bearing substrate, at least 80% of the tensile strength of the load bearing substrate, or at least 85% of the tensile strength of the load bearing substrate.

Embodiment 139. The bushing according to any one of embodiments 118 through 138, wherein the corrosion prevention layer has content of magnesium of at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%.

Embodiment 140. The bushing according to any one of embodiments 118 through 139, wherein the corrosion prevention layer has a magnesium content of not greater than 99.99999 wt%, not greater than 99.99 wt%, not greater than 99.95 wt%, not greater than 99.9 wt%, not greater than 99.85 wt%, not greater than 99.8 wt%, not greater than 99.5 wt%, not greater than 99 wt%, not greater than 98 wt%, not greater than 95 wt%, not greater than 93 wt%, or not greater than 85 wt%.

Embodiment 141. The bushing according to any one of embodiments 118 through 139, wherein the corrosion prevention layer has a magnesium content in a range from 25 wt% to 99.99999 wt%, in a range from 50 wt% to 99.99 wt%, in a range from 90 wt% to 99.99 wt%, or in a range from 95 wt% to 99.9 wt%.

Embodiment 142. The bushing according to any one of embodiments 118 through 141, wherein the sliding layer comprises a fluoroploymer.

Embodiment 143. The bushing according to any one of embodiments 118 through 142, wherein the sliding layer comprises a polytetrafluoroethylene (PTFE), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), polyoxymethylene (POM), polyethylene (PE), UHMWPE, or a mixture thereof.

Embodiment 144. The bushing according to any one of embodiments 118 through 143, wherein the sliding layer comprises a polytetrafluoroethylene compound layer.

Embodiment 145. The bushing according to any one of embodiments 118 through 144, wherein the sliding layer consists essentially of a polytetrafluoroethylene compound layer.

Embodiment 146. The bushing according to any one of embodiments 118 through 145, wherein the sliding layer has a thickness in a range between 0.05 mm and 5 mm, in a range between 0.2 mm and 2 mm , or in a range between 0.3 mm and 1 mm.

Embodiment 147. The bushing according to any one of embodiments 118 through 146 further comprising an adhesive layer adjacent to the sliding layer.

Embodiment 148. The bushing according to embodiment 147, wherein the adhesive layer comprises a thermoplastic.

Embodiment 149. The bushing according to embodiment 148, wherein the thermoplastic comprises tetrafluoroethylene-hexafluoropropylene (FEP), perfluoroalkoxyethylene (PFA), polyimide (PI), polyamidimide (PAI), polyphenylene sulfide (PPS), polyphenylene sulfone (PPSO2), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (TFM), polyvinylidene fluoride (PVDF), ethylene-chlorotrifluoroethylene (ECTFE), polyethersulfone (PES), polyetherketone (PEK), polyethylene (PE), UHMWPE, or any combination thereof.

Embodiment 150. The bushing according to embodiment 149, wherein the adhesive layer consists essentially of a thermoplastic selected from the group of tetrafluoroethylene-hexafluoropropylene (FEP), perfluoroalkoxyethylene (PFA), and a combination thereof.

Embodiment 151. The bushing according to embodiment 150, wherein the thermoplastic includes a modified thermoplastic comprising at least one of the group selected from C(=O)R, C-O-R, COOH, COOR, COH, ore any combination thereof, wherein R are cyclic or linear organic residues having from 1 to 20 carbon atoms.

Embodiment 152. The bushing according to any one of embodiments 118 through 151 further comprising an expanded metal layer adjacent to the first major surface.

Embodiment 153. The bushing according to embodiment 152, wherein the expanded metal layer comprises an aluminum alloy, a steel metal, a steel cladded or coated with an corrosion prevention layer, or a combination thereof.

Embodiment 154. The bushing according to embodiment 152, wherein the expanded metal layer is embedded in a polymer matrix.

Embodiment 155. The bushing according to any one of embodiments 118 through 154, wherein the corrosion prevention layer has a structured surface.

Embodiment 156. The according to any one of embodiments 118 through 155, wherein the corrosion prevention layer has a structured surface comprising wall-like depressions, wall-like elevations, or any combination thereof.

Embodiment 157. The bushing according to embodiment 156, wherein the wall-like depressions or wall-like elevations have a height in a range of 0.1 microns to 200 microns, in a range of 1 micron to 50 microns, or 2 microns to 30 microns.

Embodiment 158. The bushing according to any one of embodiments 118 through 157, wherein the corrosion prevention layer has a polygon structure.

Embodiment 159. The bushing according to embodiment 158, wherein the polygon structure is regular or non-regular.

Embodiment 160. The bushing according to embodiment 158, wherein the polygon structure is a honeycomb structure.

Embodiment 161. The bushing according to any one of embodiments 118 through 160 further comprising an aluminous layer overlying the edges.

Embodiment 162. The bushing according to any one of embodiments 118 through 161, wherein the aluminous layer comprises $Al_2O_3$.

Embodiment 163. The bushing according to embodiment 161, wherein the aluminous layer has a thickness of not greater than 5 microns, not greater than 4 microns, not greater than 3 microns, not greater than 2 microns, not greater than 1.5 microns, not greater than 1 micron, not greater than 0.9 microns, not greater than 0.8 microns, not greater than 0.7 microns, not greater than 0.6 microns, or not greater than 0.5 microns.

Embodiment 164. The bushing according to any one of embodiments 118 through 163, wherein the bushing has a corrosion resistance rating according to neutral salt spray test ISO 9227:2006, of at least 300 hours, at least 400 hours, at least 500 hours, at least 600 hours, at least 700 hours, at least 800 hours, at least 900 hours, at least 1000 hours, or at least 1100 hours.

Embodiment 165. The bushing according to any one of embodiments 118 through 164, wherein the bushing has sizing capability of at least 3%, at least 4%, at least 5%, at least 6%, at least 7%, at least 8%, at least 10%, at least 12%, at least 14%, at least 16%, or at least 18%.

Embodiment 166. A sliding article comprising:

a load bearing substrate, having a first major surface, a second major surface, and an edge, the load bearing having a thickness t1,
a coating overlying and in direct contact with the first major surface, the coating comprising elemental metal having a Pauling electronegativity less than 1.83, the coating having a thickness t2, wherein t2 is at least 10 microns,
a sliding layer overlying the first or the second major surface,

wherein a ratio of t2/t1 is at least 1/10.

Embodiment 167. A hinge assembly comprising :

a first hinge portion and a second hinge portion;
a pin joining the first hinge portion with the second hinge portion; and
a sliding article, the sliding article comprising:

a load bearing substrate, having a first major surface, a second major surface, and an edge, the load bearing having a thickness t1,
a coating overlying and in direct contact with the first major surface, the coating comprising elemental metal having a Pauling electronegativity less than 1.83, the coating having a thickness t2, wherein t2 is at least 10 microns,
a sliding layer overlying the first or the second major surface,
wherein a ratio of t2/t1 is at least 1/10.

Embodiment 168. The sliding article or hinge assembly according to any one of embodiments 166 or 167 further comprising an additional coating overlying and in direct contact with the second major surface, the additional coating having a thickness t3.

Embodiment 169. The sliding article or hinge assembly according to any one of embodiments 166 through 168 further comprising a functional layer overlying the load bearing substrate opposite the sliding layer.

Embodiment 170. The sliding article or hinge assembly according to embodiment 169, wherein the functional layer is a second sliding layer.

Embodiment 171. The sliding article or hinge assembly according to embodiment 169, wherein the functional layer is an elastomeric layer.

Embodiment 172. The sliding article or hinge assembly according to embodiment 171, wherein the elastomeric layer includes at least one of nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

Embodiment 173. The sliding article or hinge assembly according to embodiment 166, wherein a ratio of (t2+t3)/t1 is not greater than 1/3, not greater than 2/7, not greater than ¼, not greater than 2/9, or not greater than 1/5.

Embodiment 174. The sliding article or hinge assembly according to embodiment 166, wherein a ratio of (t2+t3)/t1 is in a range from 1/10 to 1/3, in a range from 118 to 1/3, or in a range from 1/5 to 1/3.

Embodiment 175. The sliding article or hinge assembly according to any one of embodiments 166 to 174, wherein the ratio of t2/t1 is not greater than 1/3, not greater than ¼, not greater than 1/5, not greater than 1/6, not greater than 1/7, not greater than 1/8, or not greater than 1/9.

Embodiment 176. The sliding article or hinge assembly according to any one of embodiments 166 to 175, wherein the ratio of t2/t1 is in a range from 1/10 to 1/3, in a range from 1/10 to 1/5, or in a range from 1/9 to 1/7.

Embodiment 177. The sliding article or hinge assembly according to any one of embodiments 166 to 176, wherein t2 is at least 25 microns, at least 30 microns, at least 35 microns, at least 40 microns, at least 45 microns, or at least 50 microns.

Embodiment 178. The sliding article or hinge assembly according to any one of embodiments 166 to 177, wherein t2 is not greater than 200 microns, not greater than 180 microns, not greater than 160 microns, not greater than 140 microns, not greater than 120 microns, not greater than 100 microns, not greater than 90 microns, not greater than 80 microns, not greater than 70 microns, or not greater than 60 microns.

Embodiment 179. The sliding article or hinge assembly according to any one of embodiments 166 to 178, wherein t2 is in a range from 20 microns to 200 microns, in a range from 25 microns to 180 microns, in a range from 30 microns to 120 microns, or in a range from 40 microns to 80 microns.

Embodiment 180. The sliding article or hinge assembly according to any one of embodiments 166 to 179, wherein t1 is at least 50 microns, at least 80 microns, at least 100 microns, at least 150 microns, at least 200 microns, at least 300 microns, at least 400 microns, at least 500 microns, at least 600 microns, at least 800 microns, at least 1000 microns, at least 1200 microns, at least 1400 microns, at least 1600 microns, at least 1800 microns, or at least 2000 microns.

Embodiment 181. The sliding article or hinge assembly according to any one of embodiments 166 to 180, wherein t1 is not greater than 2200 microns, not greater than 2000 microns, not greater than 1800 microns, not greater than 1600 microns, not greater than 1400 microns, not greater than 1200 microns, not grater than 1000 microns, not greater than 800 microns, not greater than 700 microns, not greater than 650 microns, not greater than 600 microns, not greater than 550 microns, not greater than 500 microns, not greater than 480 microns, not greater than 460 microns, not greater than 440 microns, or not greater than 420 microns.

Embodiment 182. The sliding article or hinge assembly according to any one of embodiments 166 to 181, wherein t1 is in a range from 50 microns to 2000 microns, in a range from 100 microns to 1000 microns, in a range from 200 microns to 500 microns, or in a range from 300 microns to 450 microns.

Embodiment 183. The sliding article or hinge assembly according to any one of embodiments 166 to 182, wherein the load bearing substrate contains a metal selected from an iron, tin, copper, zinc, titanium, scandium, vanadium, chromium, manganese, cobalt, nickel, or any combination thereof.

Embodiment 184. The sliding article or hinge assembly according to embodiment 183, wherein the iron-containing substrate comprises steel.

Embodiment 185. The sliding article or hinge assembly according to any one of embodiments 166 to 184, wherein the load bearing substrate is selected from a steel substrate, a brass substrate, a bronze substrate, or a combination thereof.

Embodiment 186. The sliding article or hinge assembly according to any one of embodiments 166 to 185, wherein the load bearing substrate comprises a steel substrate.

Embodiment 187. The sliding article or hinge assembly according to any one of embodiments 166 to 186, wherein the load bearing substrate consists essentially of a steel substrate.

Embodiment 188. The sliding article or hinge assembly according to any one of embodiments 166 to 187, wherein the load bearing substrate has a tensile strength of at least 120 MPa, at least 140 MPa, 160 MPa, at least 180 MPa, at least 200 MPa, at least 220 MPa, or at least 240 MPa.

Embodiment 189. The sliding article or hinge assembly according to any one of embodiments 166 to 188, wherein the load bearing substrate has a tensile strength of not greater than 600 MPa, not greater than 500 MPa, not greater than 450 MPa, not greater than 400 MPa, not greater than 350 MPa, not greater than 300 MPa, or not greater than 250 MPa.

Embodiment 190. The sliding article or hinge assembly according to any one of embodiments 166 to 189, wherein the load bearing substrate has a yield strength in a range from 100 MPa to 2000 MPa, in a range from 150 MPa to 1500 MPa, in a range from 200 MPa to 1000 MPa, or in a range from 200 MPa to 600 MPa.

Embodiment 191. The sliding article or hinge assembly according to any one of embodiments 166 to 190, wherein the coating has a tensile strength of at least 50 MPa, at least 55 MPa, 60 MPa, at least 65 MPa, at least 70 MPa, at least 75 MPa, or at least 80 MPa.

Embodiment 192. The sliding article or hinge assembly according to any one of embodiments 166 to 191, wherein the coating has a tensile strength of not greater than 200 MPa, not greater than 190 MPa, not greater than 180 MPa, not greater than 160 MPa, not greater than 150 MPa, not greater than 140 MPa, not greater than 130 MPa, not greater than 120 MPa, not greater than 110 MPa, or not greater than 100 MPa.

Embodiment 193. The sliding article or hinge assembly according to any one of embodiments 166 to 192, wherein the coating comprises elemental metal selected from the group of beryllium, magnesium, aluminum, zinc, or any combination thereof

Embodiment 194. The sliding article or hinge assembly according to any one of embodiments 166 to 193, wherein the combined tensile strength of the load bearing substrate and the coating is at least 70% of the tensile strength of the load bearing substrate, at least 75% of the tensile strength of the load bearing substrate, at least 80% of the tensile strength of the load bearing substrate, at least 80% of the tensile strength of the load bearing substrate, or at least 85% of the tensile strength of the load bearing substrate.

Embodiment 195. The sliding article or hinge assembly according to any one of embodiments 166 to 194, wherein the coating has content of the elemental metal selected from magnesium, aluminum, or zinc of at least 20 wt%, at least 30 wt%, at least 40 wt%, at least 50 wt%, at least 60 wt%, at least 70 wt%, at least 75 wt%, at least 80 wt%, at least 85 wt%, or at least 90 wt%.

Embodiment 196. The sliding article or hinge assembly according to any one of embodiments 166 to 195, wherein the coating has the elemental metal selected from magnesium, aluminum, or zinc in a range from 25 wt% to 99.99999 wt%, in a range from 50 wt% to 99.99 wt%, in a range from 90 wt% to 99.99 wt%, or in a range from 95 wt% to 99.9 wt%.

Embodiment 197. The sliding article or hinge assembly according to any one of embodiments 166 to 196, wherein the sliding layer comprises a fluoroploymer.

Embodiment 198. The sliding article or hinge assembly according to any one of embodiments 166 to 197, wherein the sliding layer comprises a polytetrafluoroethylene (PTFE), a modified PTFE (TFM), a fluorinated ethylene propylene (FEP), a polyvinylidene fluoride (PVDF), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), a perfluoro methyl alkoxy (MFA), polyoxymethylene (POM), polyethylene (PE), UHMWPE, or a mixture thereof.

Embodiment 199. The sliding article or hinge assembly according to any one of embodiments 166 to 198, wherein the sliding layer comprises a polytetrafluoroethylene compound layer.

Embodiment 200. The sliding article or hinge assembly according to any one of embodiments 166 to 199, wherein the sliding layer consists essentially of a polytetrafluoroethylene compound layer.

Embodiment 201. The sliding article or hinge assembly according to any one of embodiments 166 to 200, wherein the sliding layer has a thickness of at least about 0.01 mm, at least about 0.05 mm, at least about 0.1 mm, at least about 0.15 mm, at least about 0.2 mm, at least about 0.25 mm, at least about 0.3 mm, at least about 0.35 mm, at least about 0.4 mm, or at least about 0.45 mm.

Embodiment 202. The sliding article or hinge assembly according to any one of embodiments 166 to 201, wherein the sliding layer has a thickness of not greater than about 5 mm, not greater than about 4 mm, not greater than about 3 mm, not greater than about 2.5 mm, not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm.

Embodiment 203. The sliding article or hinge assembly according to any one of embodiments 166 to 202, wherein the sliding layer has a thickness in a range between 0.05 mm and 5 mm, in a range between 0.2 mm and 2 mm , or in a range between 0.3 mm and 1 mm.

Embodiment 204. The sliding article or hinge assembly according to any one of embodiments 166 to 203 further comprising an adhesive layer adjacent to the sliding layer.

Embodiment 205. The sliding article or hinge assembly according to embodiment 204, wherein the adhesive layer comprises a thermoplastic.

Embodiment 206. The sliding article or hinge assembly according to embodiment 205, wherein the thermoplastic comprises tetrafluoroethylene-hexafluoropropylene (FEP), perfluoroalkoxyethylene (PFA), polyimide (PI), polyamidimide (PAI), polyphenylene sulfide (PPS), polyphenylene sulfone (PPSO2), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (TFM), polyvinylidene fluoride (PVDF), ethylene-chlorotrifluoroethylene (ECTFE), polyethersulfone (PES), polyetherketone (PEK), polyethylene (PE), UHMWPE, or any combination thereof.

Embodiment 207. The sliding article or hinge assembly according to embodiment 205, wherein the adhesive layer consists essentially of a thermoplastic selected from the group of tetrafluoroethylene-hexafluoropropylene (FEP), perfluoroalkoxyethylene (PFA), and a combination thereof.

Embodiment 208. The sliding article or hinge assembly according to embodiment 205, wherein the thermoplastic includes a modified thermoplastic comprising at least one of the group selected from C(=O)R, C-O-R, COOH, COOR, COH, ore any combination thereof, wherein R are cyclic or linear organic residues having from 1 to 20 carbon atoms.

Embodiment 209. The sliding article or hinge assembly according to any one of embodiments 166 to 208 further comprising a discontinuous metal layer adjacent to the first major surface.

Embodiment 210. The sliding article or hinge assembly according to embodiment 209, wherein the discontinuous metal layer includes an expanded metal, a mesh, a fleece, a foam, or a combination thereof.

Embodiment 211. The sliding article or hinge assembly according to embodiment 209, wherein the discontinuous metal layer is embedded in a polymer matrix.

Embodiment 212. The sliding article or hinge assembly according to embodiment 209, wherein the discontinuous metal layer has a mesh size of at least 10 mesh/inch, such as at least 11 mesh/inch, at least 13 mesh/inch, at least 15 mesh/inch, at least 17 mesh/inch, at least 19 mesh/inch, or at least 21 mesh/inch.

Embodiment 213. The sliding article or hinge assembly according to embodiment 209, wherein the discontinuous metal layer has a thickness of at least 0.1 mm, such as at least 0.2 mm, at least 0.3 mm, at least 0.4 mm, at least 0.5 mm, or at least 0.6 mm.

Embodiment 214. The sliding article or hinge assembly according to embodiment 209, wherein the discontinuous metal layer has a thickness of not greater than 1 mm, not greater than 0.9 mm, not greater than 0.8 mm, not greater than 0.7 mm, not greater than 0.6 mm, not greater than 0.55 mm, or not greater than 0.5 mm.

Embodiment 215. The sliding article or hinge assembly according to any one of embodiments 166 to 214, wherein the coating has a structured surface.

Embodiment 216. The sliding article or hinge assembly according to any one of embodiments 166 to 215, wherein the coating has a structured surface comprising wall-like depressions, wall-like elevations, or any combination thereof.

Embodiment 217. The sliding article or hinge assembly according to embodiment 216, wherein the wall-like depressions or wall-like elevations have a height in a range of 0.1 microns to 200 microns, in a range of 1 micron to 50 microns, or 2 microns to 30 microns.

Embodiment 218. The sliding article or hinge assembly according to any one of embodiments 166 to 217, wherein the coating has a polygon structure.

Embodiment 219. The sliding article or hinge assembly according to embodiment 218, wherein the polygon structure is regular or non-regular.

Embodiment 220. The sliding article or hinge assembly according to embodiment 218, wherein the polygon structure is a honeycomb structure.

Embodiment 221. The sliding article or hinge assembly according to any one of embodiments 166 to 220, wherein the coating has a surface roughness of at least 1 micron, at least 2 microns, at least 3 microns, at least 4 microns, or at least 5 microns.

Embodiment 222. The sliding article or hinge assembly according to any one of embodiments 166 to 222, wherein the coating has a surface roughness of not greater than 20 microns, not greater than 15 microns, not greater than 12 microns, not greater than 10 microns, or not greater than 8 microns.

Embodiment 223. The sliding article or hinge assembly according to any one of embodiments 166 to 222 further comprising a passivating layer overlying the edges.

Embodiment 224. The sliding article or hinge assembly according to embodiment 223, wherein the passivating layer comprises a compound selected from $Al_2O_3$, MgO, ZnO, BeO, or any combination thereof.

Embodiment 225. The sliding article or hinge assembly according to embodiment 223, wherein the passivating layer has a thickness of not greater than 5 microns, not greater than 4 microns, not greater than 3 microns, not greater than 2 microns, not greater than 1.5 microns, not greater than 1 micron, not greater than 0.9 microns, not greater than 0.8 microns, not greater than 0.7 microns, not greater than 0.6 microns, or not greater than 0.5 microns.

Embodiment 226. The sliding article or hinge assembly according to any one of embodiments 166 to 225, wherein the sliding article has a corrosion resistance rating according to neutral salt spray test ISO 9227:2006, of at least 300 hours, at least 400 hours, at least 500 hours, at least 600 hours, at least 700 hours, at least 800 hours, at least 900 hours, at least 1000 hours, or at least 1100 hours.

Embodiment 227. The sliding article or hinge assembly according to any one of embodiments 166 to 226, wherein the sliding article has a corrosion resistance rating of not greater than 1 million hours, not greater than 100 000 hours, or not greater than 10000 hours.

Embodiment 228. The sliding article or hinge assembly according to any one of embodiments 166 to 227, wherein the sliding article has sizing capability of at least 3%, at least 4%, at least 5%, at least 6%, at least 7%, at least 8%, at least 10%, at least 12%, at least 14%, at least 16%, or at least 18%.

Embodiment 229. The sliding article or hinge assembly according to any one of embodiments 1 to 64 or 166 to 228, wherein the sliding article is selected from a plain bearing, a bushing, a spherical bearing, a ball bearing, a washer, a bearing shell, or a combination thereof.

Embodiment 230. A bushing comprising: a porous metallic layer, the porous metallic layer formed by a first composition and a second composition, the first composition comprising iron, the second composition comprising a metal having an electronegativity less than iron, and a sliding layer overlying the porous metallic layer

.Embodiment 231. A hinge assembly comprising: a first hinge portion and a second hinge portion; a pin joining the first hinge portion with the second hinge portion; and a bushing, the bushing comprising: a porous metallic layer, the porous metallic layer formed by a first composition and a second composition, the first composition comprising iron, the second composition comprising a metal having an electronegativity less than iron, and a sliding layer overlying the porous metallic layer.

Embodiment 232. The bushing or hinge assembly according to any one of Embodiments 230 or 231, wherein the porous metallic layer has a porosity of at least 1%, at least 5%, at least 10%, at least 15%, at least 20%, or at least 25%.

Embodiment 233. The bushing or hinge assembly according to any one of embodiments 230 or 231, wherein the porous metallic layer has a porosity of not greater than 99%, not greater than 95%, not greater than 90%, not greater than 85%, not greater than 80%, or not greater than 75%.

Embodiment 234. The bushing or hinge assembly according to any one of embodiments 230 or 231, wherein the porous metallic is selected from a mesh material, a grid, an expanded sheet, or a perforated sheet.

Embodiment 235. The bushing or hinge assembly according to any one of embodiments 230 or 231, wherein the first composition includes steel.

Embodiment 236. The bushing or hinge assembly according to any one of embodiments 230 or 231, wherein the second composition includes aluminum, magnesium, zinc, or an alloy thereof.

Embodiment 237. The bushing or hinge assembly according to any one of embodiments 230 or 231, wherein the second composition is not greater than 10 wt%, not greater than 8 wt%, not greater than 6 wt%, not greater than 4 wt%, not greater than 2 wt%, not greater than 1.5 wt%, not greater than 1 wt%, not greater than 0.8 wt%, not greater than 0.6 wt%, or not greater than 0.3 wt% of the porous metallic layer.

Embodiment 238. The bushing or hinge assembly according to any one of embodiments 230 or 231, wherein the sliding layer comprises a fluoroploymer.

Embodiment 239. The bushing or hinge assembly according to any one of embodiments 230 or 231, wherein the sliding layer comprises a polytetrafluoroethylene (PTFE), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), polyoxymethylene (POM), polyethylene (PE), UHMWPE, or a mixture thereof.

Embodiment 240. The bushing or hinge assembly according to any one of embodiments 230 or 231, wherein the sliding layer comprises a polytetrafluoroethylene compound layer.

Embodiment 241. The bushing or hinge assembly according to any one of embodiments 230 or 231, wherein the sliding layer consists essentially of a polytetrafluoroethylene compound layer.

Embodiment 242. The bushing or hinge assembly according to any one of embodiments 230 or 231, wherein the sliding layer has a thickness of at least about 0.05 mm, such as at least about 0.1 mm, at least about 0.15 mm, at least about 0.2 mm, at least about 0.25 mm, at least about 0.3 mm, at least about 0.35 mm, at least about 0.4 mm, or at least about 0.45 mm.

Embodiment 243. The bushing or hinge assembly according to any one of embodiments 230 or 231, wherein the sliding layer has a thickness of not greater than about 5 mm, not greater than about 4 mm, not greater than about 3 mm, not greater than about 2.5 mm, not greater than about 2 mm, such as not greater than about 1.5 mm, not greater than about 1 mm, not greater than about 0.9 mm, not greater than about 0.8 mm, not greater than about 0.7 mm, not greater than about 0.6 mm, not greater than about 0.55 mm, or not greater than about 0.5 mm.

Embodiment 244. The bushing or hinge assembly according to any one of embodiments 230 or 231, wherein the sliding layer has a thickness in a range between 0.05 mm and 5 mm, in a range between 0.2 mm and 2 mm , or in a range between 0.3 mm and 1 mm.

Embodiment 245. The bushing or hinge assembly according to any one of embodiments 230 or 231, wherein the porous metallic layer is embedded in the sliding layer.

Embodiment 246. The bushing or hinge assembly according to any one of embodiments 230 or 231, wherein the bushing has a corrosion resistance rating according to neutral salt spray test ISO 9227:2006, of at least 300 hours, at least 400 hours, at least 500 hours, at least 600 hours, at least 700 hours, at least 800 hours, at least 900 hours, at least 1000 hours, or at least 1100 hours.

Embodiment 247. The bushing or hinge assembly according to any one of embodiments 230 or 231, wherein the bushing has a corrosion resistance rating of not greater than 1 million hours, not greater than 100 000 hours, or not greater than 10000 hours.

Embodiment 248. The bushing or hinge assembly according to any one of embodiments 230 or 231, wherein the bushing has sizing capability of at least 3%, at least 4%, at least 5%, at least 6%, at least 7%, at least 8%, at least 10%, at least 12%, at least 14%, at least 16%, or at least 18%.

Embodiment 249. A method of preparing a bushing, the method comprising: providing a metal wire or a metal sheet, each comprising iron;

applying an metal containing composition onto the metal wire or metal sheet to form a metal precursor; forming a mesh or an expanded sheet from the metal precursor applying a sliding layer onto the mesh or expanded sheet to form a stack, calendaring the stack to form a laminate; cutting a blank from the laminate; and forming a semi-finished bushing from the blank.

Embodiment 250. The method according to embodiment 249, wherein the applying an metal containing composition includes cladding, spray coating, metal spraying, mechanical coating, galvanic coating, hot-dipping, or any combination thereof

Examples

A Corrosion Resistance Rating is determined according to neutral salt spray test ISO 9227:2006. Samples are stored at room temperature for 24 hours prior testing. Samples are set on PVC racks or hung from a nylon thread and placed in to a salt spray chamber. At least 5 samples per variation of bushings are tested per salt spray test. A visual examination of the samples occurs in certain intervals.

For example, Sample 1 is prepared by cutting a blank from a laminate comprising 0.25 mm PTFE compound tape, 0.03 mm ETFE adhesive, and a substrate comprising 0.47 mm double side aluminum-cladded steel, wherein each aluminum layer is 20 microns. Sample 1 is prepared by cutting a blank from a laminate comprising 0.25 mm PTFE compound tape, 0.03 mm ETFE adhesive, and a substrate comprising 0.45 mm double side aluminum-cladded steel, wherein each aluminum layer is 50 microns. Accordingly, the difference between Sample 1 and Sample 2 is the thickness of the aluminum layers.

The samples are shaped to form the semi-finished bushing. The blank is shaped by rolling and flanging to obtain the desired shape. The Corrosion Resistance Rating of Sample 1 was determined to be less than 300 hours, i.e. red corrosion was observed at 300 hours. The Corrosion Resistance Rating of Sample 2 was determined to be at least 1000 hours, i.e. no observation of red corrosion at 1000 hours, and no red rust observation after 1500 hours and 3000 hours.

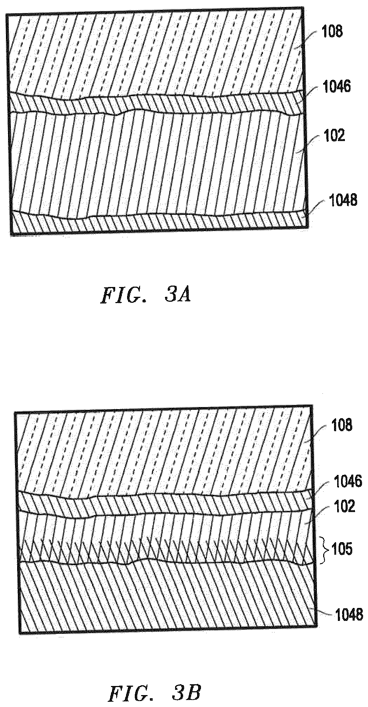

FIGs 3A and 3B depicts line diagrams of Scanning Electron Microscope scans (SEM) with an energy dispersive X-ray spectroscopy detector (EDS) of Sample 2 of an edge before and after the shaping. In FIG 3A, layers 1048 and 1046 are the 50 microns aluminum layers cladded onto steel layer 102. Sliding layer 108 is a PTFE tape and the adhesive layer between 108 and 1046 cannot be distinguished by EDS analysis. As can be seen after the shaping the substrate 102 is covered by aluminum from layer 1048 as a result of the shaping process. The coverage does not extend across the entire cross area of layer 102. In fact there is a transitional area 105 that shows the presence of iron and aluminum.

For Sizing capacity testing, three bushings having a wall thickness of 1mm. Bushing 1 was a standard SM material (SM100CG, available from Saint-Gobain Performance Plastics) with a 0.5mm double side aluminum-cladded steel, wherein each aluminum layer is 50 microns, Bushing 2 was an SM 100CG bushing further including a 0.4 mm expanded aluminum (99.5) mesh in the sliding layer, and Bushing 3 was an SM 100CG bushing further including an 0.4 mm expanded aluminum magnesium alloy (AlMg$_3$) mesh in the sliding layer.

Sizing capacity was determined by the amount of deformation upon insertion of a series of 5 oversized pins having an oversize over the inner diameter of the bushing ranging from 0.02mm to 0.22 mm. The inner diameter of the three bushings was 15 mm. Table 1 depicts the resulting size capabilities (plastic deformation)

Table 1

| Pin | 1 | 2 | 3 | 4 | 5 |
|---|---|---|---|---|---|
| Bushing 1 | 9.5% | 11% | 12.5% | 15% | N/A |
| Bushing 2 | 7.5% | 8.5% | 11.5% | 13% | 16% |
| Bushing 3 | 10% | 12.5% | 14.5% | 16% | 18% |

**Claims**

1. A sliding article comprising:

   a load bearing substrate, having a first major surface, a second major surface, and an edge, the load bearing having a thickness t1,
   a metal containing layer overlying and in direct contact with the first major surface, the metal containing layer having a thickness t2, wherein t2 is not greater than 60 $\mu$m (microns),
   a sliding layer overlying the first or the second major surface,
   wherein a ratio of t2/t1 is less than 1/9.

2. A hinge assembly comprising:

   a first pivot point portion and a second pivot point portion;
   a pin joining the first pivot point portion with the second pivot point portion; and
   a sliding article, the sliding article comprising:
   a load bearing substrate, having a first major surface, a second major surface, and an edge, the load bearing having a thickness t1, a metal containing layer overlying and in direct contact with the first major surface, the metal containing layer having a thickness t2, wherein t2 is not greater than 60 $\mu$m (microns), a sliding layer overlying the first or the second major surface, wherein a ratio of t2/t1 is less than 1/9.

3. The sliding article or hinge assembly according to any one of claims 1 or 2, further comprising an additional metal containing layer overlying and in direct contact with the second major surface, the additional metal containing layer having a thickness t3.

4. The sliding article or hinge assembly according to any one of the preceding claims, further comprising a functional layer overlying the load bearing substrate opposite the sliding layer.

5. The sliding article or hinge assembly according to claim 4, wherein the functional layer is a second sliding layer.

6. The sliding article or hinge assembly according to claim 4, wherein the functional layer is an elastomeric layer.

7. The sliding article or hinge assembly according to claim 6, wherein the elastomeric layer includes at least one of nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoro elastomer.

8. The sliding article or hinge assembly according to claim 3, wherein a ratio of (t2+t3)/t1 is not greater than 1/3.

9. The sliding article or hinge assembly according to any one of the preceding claims, wherein the ratio of t2/t1 is not greater than 1/3.

10. The sliding article or hinge assembly according to any one of the preceding claims, wherein t2 is at least 25 $\mu$m (microns) and not greater than 200 $\mu$m (microns).

11. The sliding article or hinge assembly according to any one of the preceding claims, wherein t1 is at least 50 $\mu$m (microns) and not greater than 2200 $\mu$m (microns).

12. The sliding article or hinge assembly according to any one of the preceding claims, wherein the load bearing substrate contains a metal selected from an iron, tin, copper, zinc, titanium, scandium, vanadium, chromium, manganese, cobalt, nickel, or any combination thereof.

13. The sliding article or hinge assembly according to any one of the preceding claims, wherein the metal containing layer has an aluminum content of at least 20 wt% and not greater than 99.99999 wt%.

14. The sliding article or hinge assembly according to any one of the preceding claims, wherein the sliding layer comprises a fluoroploymer.

15. The sliding article or hinge assembly according to any one of the preceding claims, wherein the sliding layer comprises a polytetrafluoroethylene (PTFE), a modified PTFE (TFM), a fluorinated ethylene propylene (FEP), a polyvinylidene fluoride (PVDF), a polyamide (PA), a polyether ether ketone (PEEK), a polyimide (PI), a polyamideimide (PAI), a polyphenylene sulfide (PPS), a polyphenylene sulphone (PPSO2), a liquid crystal polymers (LCP), perfluoroalkoxypolymer (PFA), a perfluoro methyl alkoxy (MFA), polyoxymethylene (POM), polyethylene (PE), UHMWPE, or a mixture thereof.

100

108
106
104
102

**FIG. 1A**

101

108
106
102
104

**FIG. 1B**

103

108
106
1042
102
1044

**FIG. 1C**

105

108
106
104
102
1042
1022
1044

**FIG. 1D**

FIG. 2A

FIG. 2B

FIG. 3A

FIG. 3B

FIG. 4

*FIG. 5*

*FIG. 6*

EP 4 234 965 A1

EP 4 234 965 A1

*FIG. 7*

Europäisches
Patentamt

European
Patent Office

Office européen
des brevets

# EUROPEAN SEARCH REPORT

Application Number

EP 23 17 5138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 465 852 A (MAHLE ENGINE SYSTEMS UK LTD [GB]; MAHLE INT GMBH [DE]) 9 June 2010 (2010-06-09) | 1,9, 11-15 | INV. F16C33/12 F16C11/04 |
| Y | * page 7 * | 2-8 | |
| X | JP 2015 200339 A (TAIHO KOGYO CO LTD) 12 November 2015 (2015-11-12) * [0025],[0039],[0023]; figures 1,2 * | 1,9, 11-15 | |
| Y | US 2011/049834 A1 (NATU PARAG [DE]) 3 March 2011 (2011-03-03) * figures 1-5 * | 2 | |
| Y | US 2005/069448 A1 (SATO ISSAKU [JP] ET AL) 31 March 2005 (2005-03-31) * paragraph [0044]; figure 1 * | 3-5 | |
| Y | US 2011/150375 A1 (JAEGER HANS-JUERGEN [DE] ET AL) 23 June 2011 (2011-06-23) * paragraph [0025] * | 6-8 | TECHNICAL FIELDS SEARCHED (IPC) F16C |

The present search report has been drawn up for all claims

| Place of search | Date of completion of the search | Examiner |
|---|---|---|
| The Hague | 21 July 2023 | Cerva-Pédrin, Sonia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

     .................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 17 5138**

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | | Publication date | Patent family member(s) | | Publication date |
|---|---|---|---|---|---|
| GB 2465852 | A | 09-06-2010 | BR | PI0922557 B1 | 24-09-2020 |
| | | | CN | 102272470 A | 07-12-2011 |
| | | | EP | 2370703 A1 | 05-10-2011 |
| | | | EP | 2708578 A1 | 19-03-2014 |
| | | | GB | 2465852 A | 09-06-2010 |
| | | | JP | 2012511128 A | 17-05-2012 |
| | | | KR | 20110100259 A | 09-09-2011 |
| | | | US | 2011317955 A1 | 29-12-2011 |
| | | | WO | 2010066396 A1 | 17-06-2010 |
| JP 2015200339 | A | 12-11-2015 | NONE | | |
| US 2011049834 | A1 | 03-03-2011 | AU | 2010288476 A1 | 29-03-2012 |
| | | | BR | 112012004438 A2 | 22-03-2016 |
| | | | CA | 2772635 A1 | 03-03-2011 |
| | | | CN | 102510957 A | 20-06-2012 |
| | | | EP | 2470804 A1 | 04-07-2012 |
| | | | ES | 2587407 T3 | 24-10-2016 |
| | | | JP | 5557914 B2 | 23-07-2014 |
| | | | JP | 2013503306 A | 31-01-2013 |
| | | | KR | 20120046776 A | 10-05-2012 |
| | | | KR | 20140078765 A | 25-06-2014 |
| | | | KR | 20150139638 A | 11-12-2015 |
| | | | KR | 20170018461 A | 17-02-2017 |
| | | | KR | 20170060616 A | 01-06-2017 |
| | | | RU | 2012110521 A | 10-10-2013 |
| | | | TW | 201107623 A | 01-03-2011 |
| | | | US | 2011049834 A1 | 03-03-2011 |
| | | | WO | 2011023794 A1 | 03-03-2011 |
| US 2005069448 | A1 | 31-03-2005 | NONE | | |
| US 2011150375 | A1 | 23-06-2011 | BR | 112012013740 A2 | 10-10-2017 |
| | | | CN | 102792036 A | 21-11-2012 |
| | | | CN | 107035768 A | 11-08-2017 |
| | | | EP | 2513505 A1 | 24-10-2012 |
| | | | JP | 5814254 B2 | 17-11-2015 |
| | | | JP | 2013512403 A | 11-04-2013 |
| | | | KR | 20120089770 A | 13-08-2012 |
| | | | KR | 20140104054 A | 27-08-2014 |
| | | | PL | 2513505 T3 | 29-09-2017 |
| | | | RU | 2012127694 A | 27-01-2014 |
| | | | SG | 180847 A1 | 30-07-2012 |
| | | | US | 2011150375 A1 | 23-06-2011 |
| | | | US | 2015033540 A1 | 05-02-2015 |
| | | | WO | 2011073412 A1 | 23-06-2011 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 23 17 5138

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | Publication date | Patent family member(s) | Publication date |
|---|---|---|---|

EPO FORM P0459

For more details about this annex : see Official Journal of the European Patent Office, No. 12/82